# EUROPEAN PATENT SPECIFICATION

(11) **EP 3 093 167 B1**
(45) Date of publication and mention of the grant of the patent: **31.10.2018**
(21) Application number: 14877575.2
(22) Date of filing: 25.12.2014
(51) Int. Cl.: B60C 27/20, B60C 27/06, B60C 27/02, B60C 27/16

(54) **ANTI-SLIP DEVICE FOR TIRE, AND BODY FOR ANTI-SLIP DEVICE FOR TIRE**
RUTSCHFESTE VORRICHTUNG FÜR REIFEN UND AUFBAU FÜR RUTSCHFESTE VORRICHTUNG FÜR REIFEN
DISPOSITIF ANTIDÉRAPAGE POUR PNEU ET CORPS POUR DISPOSITIF ANTIDÉRAPAGE POUR PNEU

(30) Priority: 09.01.2014 JP 2014002162; 15.05.2014 JP 2014101734
(43) Date of publication of application: 16.11.2016
(73) Proprietor: KAGA CO., LTD., Kita-ku, Saitama-shi, Saitama (JP)
(72) Inventor: SAKAKIBARA, Kouichi, Hashima-shi, Gifu 501-6335 (JP)
(74) Representative: Hoffmann Eitle
(86) International application number: PCT/JP2014/084263
(87) International publication number: WO 2015/105005

(56) References cited:
- JP-A- S61 207 203
- JP-A- S63 287 609
- JP-A- 2004 142 692
- JP-A- 2007 290 627
- JP-A- 2008 094 220
- JP-A- 2013 139 197
- JP-B1- S 492 043
- JP-B1- 5 017 737
- JP-B1- 5 253 609
- JP-B2- 3 557 464
- JP-U- H02 129 906
- JP-Y1- S3 528 806
- US-A- 2 584 625
- US-A- 3 198 233
- US-A1- 2003 131 917

## Description

### TECHNICAL FIELD

The present invention relates to a main body for a tire anti-skid device (or simply, "anti-skid device") and to a tire anti-skid device whereby slipping and the like of a tire on snow-covered roads or iced roads can be suppressed, the tire anti-skid device being mounted to a tire of an automobile or the like.

### BACKGROUND ART

In the past, tires have been replaced with studless tires, or metal chains have been mounted in order to avoid slippage and the like when traveling on snow-covered roads or iced roads by automobile or the like. However, studless tires are expensive and have poor fuel economy in comparison with summer tires. Conventional metal chains are also not easy to mount, and particularly in the case of large vehicles, the mounting of conventional metal chains is correspondingly labor intensive. Innovative tire anti-skid devices capable of fundamentally overcoming such problems of the prior art have already been proposed by the present inventors, and the relevant disclosures thereof are found in the patent documents listed below, for example.

### [Prior Art Documents]

### [Patent Documents]

[Patent Document 1] Japanese Patent No. 5253609
[Patent Document 2] Japanese Patent No. 5017737 showing the features of the preamble of claim 1.

US 2003/0131917 A1 discloses a tire anti-skid apparatus having a plurality of non-metallic anti-skid members adapted to be arranged along a peripheral direction of a tire, the anti-skid members including: an anti-skid tread portion; and a plurality of connecting portions extending from the anti-skid tread portion in a directions perpendicular to the peripheral direction; and linking portions adapted to be disposed on a vehicle outside portion and a vehicle inside portion of the tire and linking the connecting portions of the anti-skid members, the linking portions including a linking member provided in the anti-skid member and linking the adjacent connecting portions of the anti-skid member which are situated in the tire peripheral direction. The linking member, the connecting portions and the anti-skid tread portion are formed integrally with one another. The linking member is formed expandable and compressible, and the connecting portion is formed deformable in the tire peripheral direction.

US 2 584 625 A discloses a rigidly integral, multi-sectional, circumferentially adaptable anti-skid and traction device for a motor vehicle wheel, each section embodying a pair of relatively parallel, arcuate, side bar segments, placed at the inner and outer sides of the wheel, joined at the ends thereof by transversely disposed traction members extending over the periphery of the wheel, their outer surfaces being provided with a multiplicity of wire traction elements forming a meshwork to produce equalization in traction as the wheel revolves; provision for attaching additional traction members to the side bar segments between the ends and complementary, adjustable, interlocking means for fastening the adjoining sections on the outer-side of the wheel, forming a rigidly expansible annulus for expeditious mounting and fastening.

### DISCLOSURE OF THE INVENTION

### Problems that the Invention is to Solve

(1) As illustrated in FIGS. 2, 3, etc., of Patent Document 1, the tire anti-skid device disclosed in Patent Document 1 comprises elementary units in which a set (pair) of main bodies are connected by steel chains or the like at inside extending parts thereof, the main bodies each having a U-shaped part made of a steel rod straddling a tire tread part and extending only in a transverse direction, an inside extending part made of a steel rod extending forward or rearward along an inside sidewall part of the tire, and an outside extending part made of a steel rod extending rearward or forward along an outside sidewall part of the tire. The tire anti-skid device can be mounted to or detached from a tire by fastening or releasing, through use of a steel connection element, the outside extending part adjacent to a single elementary unit or a plurality of the elementary units. This tire anti-skid device has the advantageous effects of being extremely easy to mount and detach, and of having extremely high anti-skid effects on snow-covered roads, iced roads, and the like.
   However, because most of the tire anti-skid device comprises main bodies in which steel rods are bent complex shapes, the tire anti-skid device is sturdy (has high strength and high rigidity) but has an extremely high manufacturing cost. Incidentally, the main bodies are configured having such complex curves in order for the main bodies (and consequently, the U-shaped parts) to be retained in a stable orientation relative to the tire by the inside extending parts and the outside extending parts extending in opposite circumferential directions from each other with respect to the U-shaped parts straddling the tread part of the tire. In the tire anti-skid device of Patent Document 1, the proper orientation is maintained at all times and consistently high anti-skid effects can be obtained irrespective of forward or reverse travel, and even when various forces are acting on the main bodies (particularly the U-shaped parts) during travel.
   Because the tire anti-skid device of Patent Document 1 comprises main bodies in which steel rods are bent into complex shapes as described above, the dimensions thereof must be changed not only for each different tire width (tread width), but also for each different aspect ratio or rim diameter. In other words, the tire sizes that can be accommodated by a single specification of tire anti-skid device is extremely limited, and numerous specifications (sizes) must be set. The tire anti-skid device of Patent Document 1 therefore has not only high manufacturing cost, but high management cost as well. Providing a connection length adjustment element such as in Patent Document 1 somewhat increases the degree of freedom of tire sizes accommodated per specification of the tire anti-skid device, but does not significantly reduce the management cost.
(2) Patent Document 2 discloses a tire anti-skid device attached to a tire by a configuration in which each of four anti-skid units comprising integrally molded stainless steel sheets, cold-rolled steel sheets, or the like is connected by a connecting plate on the inside of the tire and connected by a latch-type hook on the outside of the tire. However, despite the tire undergoing significant flattening and torsion during travel, the tire anti-skid device of Patent Document 2 is made entirely of steel sheets and other rigid materials, and the deformation tolerance thereof is extremely small. Consequently, it is extremely difficult to travel with such a tire anti-skid device actually mounted to a tire, and the anti-skid device is impractical. Were such a tire anti-skid device to be manufactured, the manufacturing cost or management cost would be considerably high, as described above, due to the tire anti-skid device being composed entirely of rigid materials.

The present invention was developed in view of the foregoing problems, and an object thereof is to provide a novel tire anti-skid device and member for a tire anti-skid device, whereby it is possible to significantly reduce manufacturing cost or management cost while ensuring excellent ease of mounting/detachment or anti-skid properties.

### Means of Solving the Problems

As a result of intensive research and repeated trial and error aimed at solving the foregoing problems, by reexamining the shape and other aspects of each constituent member, the inventors devised a novel tire anti-skid device which makes it possible to significantly reduce manufacturing cost or management cost while ensuring effects at least equal to those of a conventional tire anti-skid device with respect to ease and rapidity of mounting/detachment and anti-skid properties on snow-covered roads, iced roads, and the like. By developing this result, the inventors perfected the present invention described below.

A main body according to the present invention is defined by claim 1. A tire anti-skid device according to the present invention is defined by claim 2. Dependent claims relate to preferred embodiments.

### <<Tire anti-skid device>>

(1) The tire anti-skid device of the present invention (referred to simply as the "anti-skid device") is characterized by being provided with: a first main body comprising an elastic material and having a first grounding planar part extending in a circumferential direction of a tire while facing a tread part of the tire, the tire being fitted to a vehicle wheel, an inner rear connecting part continuous with the first grounding planar part and provided on a rear side of the first grounding planar part on an inside of the tire, and an outer front connecting part continuous with the first grounding planar part and provided on a front side of the first grounding planar part on an outside of the tire; and
   a second main body arranged to the rear of the first main body, comprising an elastic material, and having a second grounding planar part extending in the circumferential direction of the tire while facing the tread part, an inner front connecting part continuous with the second grounding planar part and provided on a front side of the second grounding planar part on the inside of the tire, and an outer rear connecting part continuous with the second grounding planar part and provided on a rear side of the second grounding planar part on the outside of the tire;
   the inner rear connecting part of the first main body and the inner front connecting part of the second main body being connected.
(2) In the anti-skid device of the present invention, an elementary unit is configured by connection of the first main body and the second main body by the inner rear connecting part and the inner front connecting part, and the anti-skid device of the present invention can easily be mounted to or detached from a tire by connecting or disconnecting one or more elementary units through use of an outer front connecting part and outer rear connecting part adjacent to each other.
   In the anti-skid device of the present invention, the inner rear connecting part and outer front connecting part of the first main body, or the inner front connecting part and outer rear connecting part of the second main body are arranged diagonally (obliquely intersecting a wheel axis) on the inside sidewall part and the outside sidewall part, respectively, so as to straddle the tread part of the tire, and the first main body or second main body (particularly the first grounding planar part or second grounding planar part) is supported thereby. As a result, even when the anti-skid device of the present invention is subjected to various external forces during travel (including forward travel as well as reverse travel), the external forces are distributed and the main bodies are maintained in the proper orientation at all times, and stable anti-skid effects can be demonstrated.
   In the conventional anti-skid device, the U-shaped parts straddling the tread part of the tire are rod-shaped and cross the tread part in a straight line, and an inside extending part and an outside extending part extending in opposite directions from the U-shaped parts are therefore necessary in order for the U-shaped parts to be supported in obliquely intersecting fashion by the inside sidewall part and outside sidewall part of the tire. In other words, the support points of the U-shaped parts are arranged in obliquely intersecting fashion by the inside extending parts and the outside extending parts extending in mutually opposite circumferential directions on the sidewall parts of the tire.
   In the anti-skid device of the present invention, however, grounding planar parts extending in the circumferential direction while facing the tread part of the tire are provided instead of rod-shaped U-shaped parts, and the grounding planar parts (and furthermore, the inside planar parts and outside planar parts described hereinafter) also perform the functions of the conventional U-shaped parts and extending parts. That is, through the anti-skid device of the present invention, there is no need to form complex U-shaped parts and extending parts by bending steel rods as in the prior art, and the same operational effects as those of the conventional anti-skid device are obtained by providing connecting bodies to front sides and rear sides of grounding planar parts.
   As a result, the main bodies of the anti-skid device of the present invention are extremely simplified, and manufacturing cost can be significantly reduced. The grounding planar parts extending in the circumferential direction while facing the tread part of the tire in the anti-skid device of the present invention eliminate the need for rod-shaped extending parts extending along both sidewall parts, or rod-shaped U-shaped parts straddling the tire as in the prior art. Therefore, in the anti-skid device of the present invention, by appropriately setting the size of the grounding planar parts in accordance with the tire width (tread width), the same specification of anti-skid device can be mounted to tires having different aspect ratios or rim diameters. In the anti-skid device of the present invention, because there is thus no need to finely set a matching size (specification) for each tire size and the degree of freedom of size compatibility is markedly greater than that of the conventional anti-skid device, the number of set sizes can be reduced, and it is possible to significantly reduce not only manufacturing cost, but management cost as well.
(3) The first main body and second main body (or simply, "main bodies") according to the present invention also comprise an elastic material rather than a rigid material (steel or the like) such as in the prior art. Therefore, even when the tire flattens or widens on the grounding side thereof, undergoes torsion due to steering wheel operation, and is significantly deformed or expanded/contracted by various factors during travel, the anti-skid device of the present invention can adequately follow such deformations and other effects in the tire. Combined with the mode of support described above, the anti-skid device of the present invention is thus stably retained on the tire. Because the anti-skid device of the present invention also has excellent ability to follow deformation of the tire, there is no significant friction or abrasion between the anti-skid device and the tire, and heat generation and the like during travel is also suppressed. As a result, the anti-skid device of the present invention exhibits excellent durability and does not damage tires. The main bodies as the principal parts also comprise an elastic material, and the anti-skid device of the present invention is therefore easily made more lightweight than an anti-skid device comprising steel or the like. As a result, not only is the ease of mounting or operability of the anti-skid device of the present invention enhanced, but it is also easy to simplify the connection structure or further reduce the overall weight of the anti-skid device because of decreased centrifugal force acting on the main bodies. In addition, the main bodies comprising an elastic material are mountable as a single specification to a plurality of sizes of tires, and the management cost of the main bodies, and consequently the anti-skid device, is also easily reduced. For example, mounting on a tire is possible even when the open groove width (inner width on the tire center side thereof) of the main bodies is less than the tire width (tread width). Consequently, there is a large degree of freedom in the form of main bodies comprising an elastic material. Furthermore, because the main bodies (grounding planar parts) grounded on a road surface comprise an elastic material, use of the anti-skid device of the present invention causes almost no damage to the road surface. A main body comprising an elastic material is also safe in such cases as when the main body is dropped onto a road.

The elastic material is defined as a material having properties whereby the material deforms (distorts) upon application of an external force (stress) thereto and returns to the original state thereof upon unloading thereof. The elastic material according to the present invention is a material capable of following tire deformation even when mounted to a tire which significantly deforms during travel. Specifically, the elastic material according to the present invention is not a rigid material such as steel, and is a rubber (including elastomers), a synthetic resin, a composite material thereof, or the like. In contrast with a main body comprising a ferrous material or the like, the main body formed from an elastic material such as described above also has excellent rust prevention, weather resistance, ease of replacement, disposability, ease of production, and other characteristics. When an anti-skid device which uses main bodies configured in this manner is mounted to a tire in travel, the increase in generated noise or vibration is suppressed, and there is minimal adverse effect on ride quality.

### <<Main body for a tire anti-skid device>>

The present invention can be understood not only as an anti-skid device, but also as a constituent member thereof, i.e., a main body for a tire anti-skid device, characterized by constituting the first main body or the second main body used in the tire anti-skid device described above, for example.

### <<Other>>

In the present specification, "first" and "second," and "front side" and "rear side" or "forward" and "rearward" are merely expressions used for convenience in describing the present invention. However, "forward" in the present specification refers to the direction in which the tire rotates during forward travel of the vehicle, and "rearward" is the opposite direction thereto, unless otherwise noted. The "front side" of a grounding planar part is not taken to mean the front part of the grounding planar part as such, but means the vicinity of the front end of the grounding planar part (particularly the vicinity of the sidewall part side thereof) or a location further forward in relation thereto. The same applies for the "rear side" of a grounding planar part. For example, the inner rear connecting part according to the present invention is provided in the vicinity of the rear end of the first grounding planar part or in a location further rearward thereof while facing the inside sidewall part of the tire. The connecting parts facing the sidewall parts are not necessarily planar, in contrast with the grounding planar parts.

The term "inside" in the present specification refers to the vehicle side, and the term "outside" refers to the opposite, non-vehicle side (the decorated-surface side in terms of the wheel). The vehicle in which the anti-skid device of the present invention is mounted may be an automobile (including freight trucks), an industrial vehicle, or the like, or a two-wheeled vehicle or the like. In the case of a two-wheeled vehicle, "inside" is interpreted as "right side," and "outside" is interpreted as "left side."

### BRIEF DESCRIPTION OF THE DRAWINGS

FIG. 1 is a front elevational view illustrating the manner in which the tire anti-skid device according to a first example is mounted to a tire;
FIG. 2 is a perspective view illustrating the elementary unit according to the first example;
FIG. 3 is a perspective view illustrating an example of the mounting/detachment connection element;
FIG. 4 is a perspective view illustrating the elementary unit according to a second example;
FIG. 5 is a perspective view illustrating the elementary unit according to a third example;
FIG. 6 is a perspective view illustrating another example of the band-shaped connecting body;
FIG. 7 is a perspective view illustrating another example of the band-shaped connecting body;
FIG. 8 is a perspective view illustrating another example of the connecting part;
FIG. 9 is a perspective view illustrating the anti-skid pattern or anti-skid elements provided on the outer surface of a grounding planar part;
FIG. 10 is a perspective view illustrating another example of the integrated main body;
FIG. 11 is a front elevational view illustrating a tire anti-skid device having another devised arrangement of elementary units;
FIG. 12 is a perspective view illustrating an elementary unit comprising main bodies in which the connecting bodies are integrated;
FIG. 13 is a perspective view illustrating an elementary unit which uses an elastic connecting body;
FIG. 14 is a perspective view illustrating an elementary unit in which a band-shaped connecting body and an elastic connecting body are used jointly;
FIG. 15A is a perspective view illustrating the manner in which locking projections and locking elements are provided on the inner surface of a grounding planar part;
FIG. 15B is a perspective view illustrating the manner in which an anti-skid sheet is provided on the inner surface of a grounding planar part;
FIG. 16 is a perspective view illustrating a band-shaped connecting body which uses a cam buckle;
FIG. 17A is a perspective view illustrating a modification of the integrated main body used in the third example; and
FIG. 17B is a partial sectional view of the modification in FIG. 17A.

### BEST MODE FOR CARRYING OUT THE INVENTION

One or more constituent elements arbitrarily selected from the present specification may be added to the constituent elements of the present invention described above. The particular best mode for carrying out the invention will vary according to the subject, required performance, and other factors.

### <<Main bodies>>

(1) The detailed form of the main bodies is not particularly limited insofar as the main bodies have the grounding planar parts and the connecting parts specified in the present invention. For example, when each main body comprises a U-shaped main body (U-shaped part) having an inside planar part continuous with an inside shoulder part of a grounding planar part and extending in a circumferential direction while facing an inside sidewall part, and an outside planar part continuous from an outside shoulder part of the grounding planar part and extending in the circumferential direction while facing an outside sidewall part, and the cross-section of each main body is substantially U-shaped (open ditch-shaped, groove-shaped), retention or ease of mounting and other characteristics are enhanced. This configuration is therefore preferred. The grounding planar part and the inside planar part or the outside planar part may have a substantially constant overall thickness, but a configuration may also be adopted in which only the grounding planar part in contact with a road surface, for example, is thicker than the inside and outside planar parts. Anti-skid properties and durability can thereby both be obtained at the same time in the anti-skid device. The shoulder parts of the grounding planar part are in the vicinity of an inside end part or an outside end part of the grounding planar part corresponding to a tread part of a tire, and are portions corresponding to shoulder parts of the tire.
   The inside width of the U-shaped main body may be constant or may vary. For example, the inside width of an opening side (distal-end side of lateral planar parts) may be increased or decreased relative to the inside width of a bottom side (grounding planar part side). When the opening side is wider than the bottom side, the ability to mount the U-shaped main body to the tire is enhanced. When the opening side is narrower than the bottom-part side, retention of the U-shaped main body on the tire is enhanced. Because the U-shaped main body comprises an elastic material, ease of mounting is adequately ensured even when the opening side is narrower than the bottom-part side.
   When a first main body comprises a first grounding planar part, a first inside planar part, and a first outside planar part, and a second main body comprises a second grounding planar part, a second inside planar part, and a second outside planar part, a configuration may be adopted in which an inner rear connecting part is provided to a rear part of the first inside planar part, an outer front connecting part is provided to a front part of the first outside planar part, an inner front connecting part is provided to a front part of the second inside planar part, and an outer rear connecting part is provided to a rear part of the second outside planar part.
   The main bodies according to the present invention may have, on the connecting parts or in the vicinity thereof, contacting parts for coming in contact with the sidewall parts of the tire. This configuration facilitates more stable retention of the main bodies by the sidewall parts of the tire, and the main bodies and other components can also be prevented from damaging the wheel. The contacting parts may be thick-walled parts or the like protruding toward the sidewall parts (toward the inside) of the tire, for example. Increasing the wall thickness of the periphery of the connecting parts also makes it possible to reinforce the connecting parts.
   In an elementary unit, the arrangement of the connecting parts provided to the main bodies constituting the elementary unit varies, and the main bodies therefore do not have basically the same shape, and different forms of main bodies are necessary in each elementary unit.
   However, when an integrated main body is used which has grounding planar parts constituting the first grounding planar part and the second grounding planar part, and at least four connecting parts constituting any of the inner rear connecting part, the outer front connecting part, the inner front connecting part, and the outer rear connecting part, the first main body and the second main body can be standardized, and elementary units can be configured by a single type of (the same shape of) integrated main body. When the integrated main body is symmetrical in a longitudinal direction (circumferential direction/the direction vertically dividing the grounding planar part) or a transverse direction (the direction crossing the grounding planar part), the ability to assembly properties or operability can be further enhanced. Use of such an integrated main body makes it possible to further reduce the manufacturing cost or management cost of the anti-skid device.
   Incidentally, the degree to which the grounding planar part or the side planar parts "extend" in the circumferential direction is preferably adjusted in accordance with the range (length) of a region of grounding (flattening zone) between the tire and the road surface. For example, in terms of the angle about the center of rotation of the tire (wheel), the grounding planar part or the side planar parts preferably extend in a range of 10° to 60°, 20° to 50°, or 25° to 45°, for example. This extension angle is the angle (included angle) between line segments connecting the center of rotation and the circumferential ends of the grounding planar part when the anti-skid device is mounted to a standard-size (theoretical value) tire on which mounting of the anti-skid device is anticipated. The side planar parts need only be within an appropriate range corresponding to the grounding planar part, and the extension angles thereof need not be strictly congruent.
(2) The main bodies according to the present invention are stably retained by the connecting parts (inner rear connecting part and outer front connecting part, and inner front connecting part and outer rear connecting part) straddling the tread part of the tire in obliquely intersecting (diagonal) fashion. In this case, the more separated the positions of the connecting parts are in the circumferential direction from a center line (center line in the wheel axis direction) crossing the grounding planar part, the larger a restoring force acting on the main bodies tends to become, and the more stable the orientation of the main bodies becomes. From this perspective, extending parts extending in the circumferential direction are preferably provided to the connecting parts, integrally therewith or independently therefrom.
   Specifically, the first main body preferably furthermore has an inner rear extending part extending rearward of the first grounding planar part on the inside of the tire (e.g., while facing the inside sidewall part), and an outer front extending part extending forward of the first grounding planar part on the outside of the tire (e.g., while facing the outside sidewall part), and the second main body preferably has an inner front extending part extending forward of the second grounding planar part on the inside of the tire, and an outer rear extending part extending rearward of the second grounding planar part on the outside of the tire. In the case of the integrated main body, the integrated main body preferably has four extending parts serving as an inner rear extending part, an inner front extending part, an outer rear extending part, and an outer front extending part.
   The connecting parts may also be arranged independently of the extending parts, but when the connecting parts are arranged in the extending parts, the shape of the main body is simplified and the main body can be more stably retained. This configuration is therefore preferred. Specifically, the inner rear connecting part is preferably provided to the inner rear extending part, the outer front connecting part is preferably provided to the outer front extending part, the inner front connecting part is preferably provided to the inner front extending part, and the outer rear connecting part is preferably provided to the outer rear extending part.
(3) In order to increase the anti-skid properties or the draining properties of the anti-skid device, grooves, depressions (recesses), or holes (pits) are preferably provided, as appropriate, in the outer surfaces of the grounding planar parts. For example, one or more elongated holes (depressions) extending in the wheel axis direction (direction crossing the tread part of the tire) may be provided in the outer surfaces of the grounding planar parts, taking into consideration the rigidity and anti-skid properties of the grounding planar parts. In addition to designing the form (tread pattern) of the external peripheral surfaces of the grounding planar parts, providing anti-skid projections (e.g., projections molded integrally with the grounding planar parts) or anti-skid elements on the external peripheral surfaces of the grounding planar parts makes it possible to further enhance the anti-skid properties of the anti-skid device. The anti-skid elements are metal pins, studs, or the like, and preferably protrude slightly from the external peripheral sides of the grounding planar parts. Locking projections or a locking elements may furthermore be provided on the internal peripheral sides of the grounding planar parts. Slippage of the main bodies with respect to the tire can thereby be suppressed, and retention of the anti-skid device on the tire can be further enhanced. Although arranged on opposite surfaces and protruding in opposite directions, the locking projections and anti-skid projections or the locking elements and anti-skid elements may have the same structure. The internal peripheral surfaces of the grounding planar parts do not come into direct contact with the road surface, as does the external peripheral surface, and therefore do not undergo much abrasion or the like. The locking elements may therefore be elements such as locking sheets for increasing frictional resistance between contacting surfaces.
   The grounding planar parts according to the present invention may be continuously planar, reticulated, or of uneven shape, or may be intermittently planar parts or the like comprising a plurality of bridging parts (band-shaped) straddling the tread part of the tire. When the grounding planar parts are intermittently planar, the main bodies can be made compact and ease of mounting, retention, durability, and other characteristics can be enhanced when the grounding planar parts are configured so that the external peripheral surface of the tire is not exposed between the bridging parts. The grounding planar parts have a predetermined length (contact length) in which the grounding planar parts contact the external peripheral surface of the tire along the circumferential direction of the tire. The (total) contact length cannot be unconditionally specified, but is preferably far greater than that of the conventional steel rods or the like, and is at least 4 cm or at least 6 cm, and corresponds to 10° or greater in terms of the extension angle described above, for example. Due to having a suitable contact length, the grounding planar parts can also be described as being band shaped, plate shaped, or sheet shaped. The same applies for the side planar parts as well. The grounding planar parts may also have a curved shape (arcuate shape in terms of the cross-section thereof in the circumferential direction) corresponding to the external peripheral surface of the tire.
(4) The connecting parts are portions to which a band-shaped connecting body comprising a belt or the like or an elastic connecting body comprising rubber or the like is connected. The form of the connecting parts is not particularly limited, but the connecting parts preferably have a shape (e.g., pit-shaped, hole-shaped (particularly, elongated hole-shaped), latching-hook-shaped, etc.) which facilitates insertion, fitting by insertion, latching, and the like of the connecting body while ensuring the rigidity/strength of the main bodies, and enables the connecting body to be stably retained. The connecting parts may also be formed directly in the main bodies, or may be formed indirectly by attaching a ring (adapter) or the like to the main bodies using fixing elements (rivets or the like).
(5) The main bodies comprise an elastic material such as a resin, a rubber or other elastomer, or a composite material. When the main bodies comprise integrally molded bodies of an elastic material molded by injection molding or the like, the main bodies can be mass produced, and the manufacturing cost of the anti-skid device is easily reduced.

The elastic material is preferably a resin or a rubber (including elastomers), for example. The rubber may be the same hard rubber material as that of the tire, for example. The elastic material may also be a composite material comprising a metal core material and a coating material comprising a resin, rubber, or the like for covering the core material. When the main bodies comprise a composite material, the rigidity or strength of the main bodies can easily be ensured by the core material, and the overall wall thickness or wall thickness distribution is easily adjusted by the rubber or other coating material. When the outer surfaces of the main bodies is made of resin or rubber, rust prevention is unnecessary at least on the main bodies, and storage performance can be enhanced. The outer surfaces of the main bodies preferably comprise rubber or the like, because this makes wheels and other components less prone to be damaged when the anti-skid device is mounted to a tire. The elastic material according to the present invention is difficult to uniformly specify, but preferably has at can be mass produced, and the manufacturing cost of the anti-skid device is easily reduced.

The elastic material is a resin or a rubber (preferably, including elastomers). The rubber may be the same hard rubber material as that of the tire, for example. The elastic material may also be a composite material comprising a metal core material and a coating material comprising a resin, rubber, or the like for covering the core material. When the main bodies comprise a composite material, the rigidity or strength of the main bodies can easily be ensured by the core material, and the overall wall thickness or wall thickness distribution is easily adjusted by the rubber or other coating material. When the outer surfaces of the main bodies is made of resin or rubber, rust prevention is unnecessary at least on the main bodies, and storage performance can be enhanced. The outer surfaces of the main bodies preferably comprise rubber or the like, because this makes wheels and other components less prone to be damaged when the anti-skid device is mounted to a tire. The elastic material according to the present invention is difficult to uniformly specify, but preferably has at least an elastic modulus (Young's modulus) of 0.01 to 10 GPa, and more preferably 0.1 to 5 GPa. The elastic material according to the present invention is thus preferably provided with the elasticity (deforming and restoring ability) to cope even with large deformations of the tire, rather than being a rigid material such as steel.

### <<Connecting body/connection element>>

(1) The connecting body or connection element according to the present invention connects the inside connecting parts (the inner rear connecting part and the inner front connecting part) to each other, or the outside connecting parts (the outer rear connecting part and the outer front connecting part) to each other. The inside connecting body (including, as appropriate, the connection or stepped fashion. Such an adjustment element may be a strap adjuster or the like, for example. A cam buckle or the like may also be used as a connection adjustment element for serving both as a connection element and an adjustment element.
   The method of connecting the connecting bodies and the connection parts of the main bodies is not particularly limited. For example, end parts of a connecting body may be inserted in the connecting parts and connected by sewing or the like, or a band-shaped connecting body and the connecting parts may be connected (attached by insertion, tightened, fastened, etc.) via various buckles or a strap adjuster or the like capable of adjusting the connection length.
   The anti-skid device of the present invention thus preferably has a flexible or stretchable inside band-shaped connecting body for connecting the inner rear connecting part and the inner front connecting part. An inner length adjustment element for adjusting the connection length of the inside band-shaped connecting body is also preferably provided. The same features are provided between the outside connecting parts as well. The anti-skid device of the present invention is preferably provided with a mounting/detachment connection element provided separately for each of the outer front connecting part and the outer rear connecting part and being capable of detachable connection, and with an outer front band-shaped connecting body for connecting the outer front connecting part and one end part of the mounting/detachment connection element, and an outer rear band-shaped connecting body for connecting the outer rear connecting part and the other end part of the mounting/detachment connection element. The outer front band-shaped connecting body or the outer rear band-shaped connecting body is also preferably provided with an outer length adjustment element (which may serve also as a mounting/detachment connection element) for adjusting the connection length. The outer front band-shaped connecting body or the outer rear band-shaped connecting body is also referred to as an outside band-shaped connecting body, as appropriate.
(2) The connecting bodies according to the present invention are not limited to the band-shaped connecting bodies described above, and may be elastic connecting bodies comprising rubber, springs, or the like. Specifically, the anti-skid device of the present invention may have a stretchable inside elastic connecting body for connecting the inner rear connecting part and the inner front connecting part. In the anti-skid device of the present invention, when two or more elementary units are connected in which a first main body and a second main body are connected between the inner rear connecting part and the inner front connecting part, the elementary units are connected between the outer front connecting part of one adjacent elementary unit and the outer rear connecting part of the other adjacent elementary unit. At this time, the anti-skid device of the present invention preferably has a stretchable outside elastic connecting body for connecting the outer front connecting part and the outer rear connecting part. The main bodies constituting the anti-skid device can thereby be more stably fixed to the tire. Of the band-shaped connecting body and the elastic connecting body according to the present invention, either is adequate by itself, but both may also be jointly used. The band-shaped connecting body may comprise an elastic body, and the band-shaped connecting body may serve also as an elastic connecting body.
(3) The anti-skid device is attached and detached by mounting and detaching the mounting/detachment connection element arranged on the outside of the tire. The type, structure, form, and other aspects of the mounting/detachment connection element are not particularly limited, but a mounting/detachment connection element capable of easy and rapid mounting is preferred. Examples of such a mounting/detachment connection element include: a latching buckle in which a latching hook pivotally provided to a buckle is fitted by insertion into a latching hole provided in a belt; a so-called one-touch buckle comprising a projecting male connector for engaging and a cylindrical female connector for including the male connector, the one-touch buckle being capable of one-touch mounting and detachment through use of an elastic lock mechanism (engaging part); a ratchet buckle comprising a belt having an uneven (toothed or undulating) surface for engagement, and a stopper (pawl) for latching on the uneven surface of the belt and allowing movement of the belt in one direction; and a cam buckle provided with a latching cam pivotally provided to a housing (buckle) and urged in one direction (latching direction), a belt being inserted through the housing, the belt being released by rotating (releasing) the latching cam in the opposite direction. In the case of an elastic connecting body capable of latching to hooks (engaging adapters) provided to the connecting parts, the anti-skid device can easily be mounted and detached merely by utilizing the stretching of the elastic connecting body.

A detachable connection element may also be provided between the inner rear connecting part and the inner front connecting part, but because the anti-skid device is preferably attached and detached with the inner rear connecting part and the inner front connecting part remaining connected, it is sufficient insofar as the connection length therebetween is adjustable. The present invention does not necessarily exclude an anti-skid device in which the interval between the inside and/or the outside connecting parts is fixed.

### <<Elementary unit>>

In the anti-skid device of the present invention, an elementary unit in which a first main body and a second main body are connected on the inside thereof (the inner rear connecting part and the inner front connecting part) constitutes a base unit. Although it is conceivable for an anti-skid device to be configured from a single elementary unit, the anti-skid device is usually configured by combining two or more elementary units.

Except for cases in which the inside connection length is adjusted, the elementary units are usually used in a state in which the insides (back sides when attached to a tire) of the two main bodies thereof are connected. It is usually preferred that the anti-skid device be attached/detached by connecting/disconnecting the mounting/detachment connection element arranged on the outside.

In the case of an anti-skid device for a small-sized vehicle such as a light automobile, two elementary units form a series, for example, and the anti-skid device can be attached/detached by connecting/disconnecting (mounting or detaching) a mounting/detachment connection element in one location. The same applies when there are three or more elementary units. One mounting/detachment connection element according to the present invention may therefore be provided for each elementary unit, but it is sufficient to provide at least one mounting/detachment connection element for the entire anti-skid device of each wheel.

However, in the case of an anti-skid device for a large-sized vehicle such as an industrial automobile, excellent ease of mounting is sometimes better obtained by adopting a configuration in which three elementary units are divisible in each anti-skid device, and connection/disconnection can be performed using mounting/detachment connection elements in a plurality of locations, for example. When a mounting/detachment connection element is provided for each elementary unit, insofar as the elementary units are of the same specification (the accommodated tire width thereof is the same), two, three, or four or more elementary units can be connected, as appropriate, and various vehicles (tire rim diameters) for attachment can be accommodated. The number of specifications or components can thereby be further reduced, and manufacturing cost or management cost can be further reduced.

### [Examples]

### [First Example]

### <<Overview>>

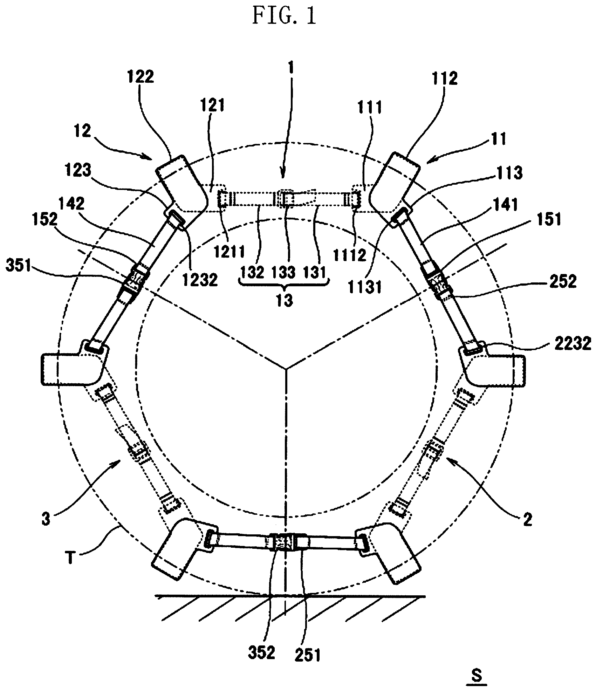

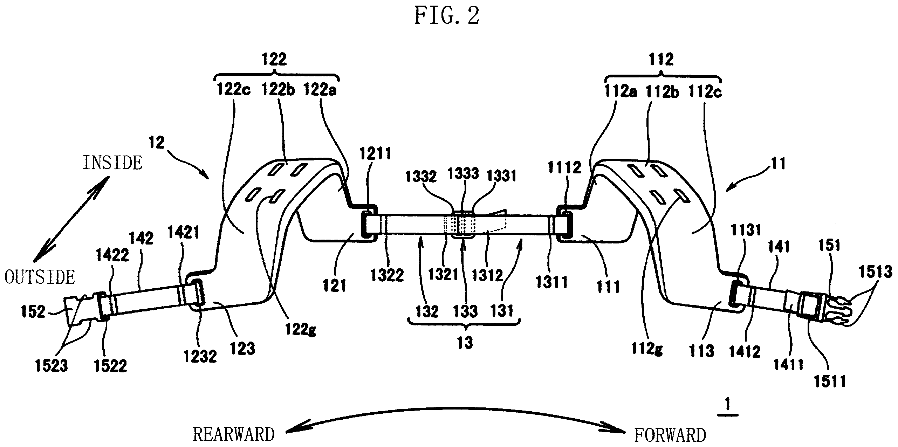

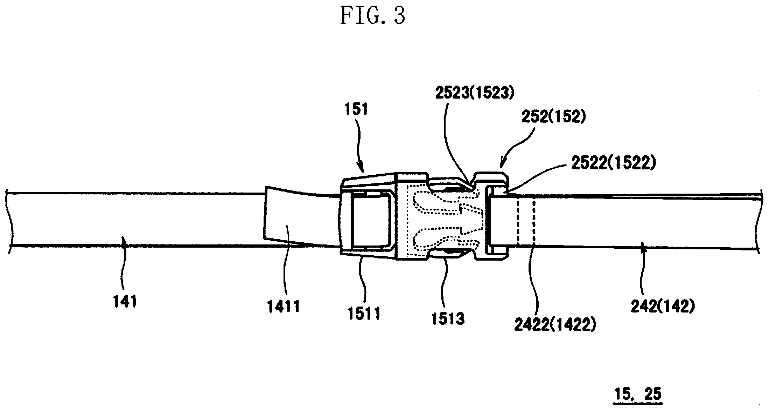

The manner in which a tire anti-skid device S (referred to simply as the "anti-skid device S") as an example of the present invention is mounted to a tire T for a large-sized automobile is illustrated in FIG. 1. The anti-skid device S comprises three elementary units 1, 2, 3. The elementary units 1, 2, 3 each have the same form, and are detachably connected on the outside (paper surface side in FIG. 1) of a tire T, which is the decorated surface side of a wheel (not illustrated). The elementary unit 1 as one of the elementary units will be described in detail below with reference to FIG. 2, which is an overall enlarged view thereof, and also FIG. 3, which is a partial enlarged view thereof, and no description of the other elementary units will be given. Members that are the same are referred to by the same reference numerals, and detailed descriptions thereof are omitted as appropriate.

### <<Elementary unit>>

The elementary unit 1 comprises a first main body 11, a second main body 12, an inside band-shaped connecting body 13 (131, 132, 133), an outside band-shaped connecting body 14 (141, 142), and a mounting/detachment connection element 15 (151, 152). As described in detail hereinafter, a fork-shaped male connector 151 constituting the mounting/detachment connection element 15 of the elementary unit 1 engages with a cylindrical female connector 252 constituting a mounting/detachment connection element 25 (251, 252) of the elementary unit 2. A cylindrical female connector 152 constituting the mounting/detachment connection element 15 of the elementary unit 1 also engages with a fork-shaped male connector 351 constituting a mounting/detachment connection element 35 (351, 352) of the elementary unit 3. The mounting/detachment connection elements 15, 25, 35 all have the same form.

### (1) Main body

The first main body 11 (first U-shaped main body) has an inner rear extending part 111, a first U-shaped part 112, and an outer front extending part 113, and comprises a wide planar body obtained by integrally molding a hard rubber (polyurethane elastomer) substantially into a U shape so as to follow the external peripheral shape (substantially U-shaped cross-section) of a tire. The first U-shaped part 112 has an inside part 112a (first inside planar part), a transverse part 112b (first grounding planar part), and an outside part 112c (first outside planar part).

The inside part 112a extends along the inside sidewall part of the tire T in a radial direction and a circumferential direction thereof. The transverse part 112b is continuous with the inside part 112a and gently bends to the outside at an angle of approximately 90°, and crosses the tread part of the tire T and extends in the circumferential direction along the external peripheral surface thereof. The outside part 112c gently bends at an angle of approximately 90° from the transverse part 112b, and extends in the radial direction and the circumferential direction along the outside sidewall part. The outermost surface of the transverse part 112b becomes a grounding surface when mounted to the tire T, and the transverse part 112b is therefore configured so as to have a greater thickness than other portions. A plurality of elongated anti-skid grooves 112g extending in the axial direction (direction perpendicular to the paper surface in FIG. 1) of the wheel are formed on the outermost surface of the transverse part 112b.

The inner rear extending part 111 is continuous with a radial-direction end part of the inside part 112a of the first U-shaped part 112, gently bends in the rearward circumferential direction at an angle of approximately 90°, and extends along the inside sidewall part. The outer front extending part 113 is continuous with a radial-direction end part of the outside part 112c of the first U-shaped part 112, gently bends in the forward circumferential direction at an angle of approximately 90°, and extends along the outside sidewall part.

An inner rear connecting part 1112 comprising a reinforced hole elongated along the radial direction of the tire is formed in a rear end part of the inner rear extending part 111. An outer front connecting part 1131 comprising a reinforced hole (slit) elongated along the radial direction of the tire is formed in a front end part of the outer front extending part 113.

The second main body 12 (second U-shaped main body) has an inner front extending part 121, a second U-shaped part 122, and an outer rear extending part 123, and comprises a wide planar body obtained by integrally molding a hard rubber substantially into a U shape so as to follow the external peripheral shape (substantially U-shaped cross-section) of a tire. The second U-shaped part 122 has an inside part 122a (second inside planar part), a transverse part 122b (second grounding planar part), and an outside part 122c (second outside planar part).

The inside part 122a extends along the inside sidewall part of the tire T in the radial direction and the circumferential direction thereof. The transverse part 122b is continuous with the inside part 122a and gently bends to the outside at an angle of approximately 90°, and crosses the tread part of the tire T and extends in the circumferential direction along the external peripheral surface thereof. The outside part 122c gently bends at an angle of approximately 90° from the transverse part 112b, and extends in the radial direction and the circumferential direction along the outside sidewall part. The outermost surface of the transverse part 122b becomes a grounding surface during mounting to the tire T, and the transverse part 122b is therefore configured so as to have a greater thickness than other portions. A plurality of elongated anti-skid grooves 122g extending in the axial direction of the wheel are formed on the outermost surface of the transverse part 122b.

The inner front extending part 121 is continuous with a radial-direction end part of the inside part 122a of the second U-shaped part 122, gently bends in the forward circumferential direction at an angle of approximately 90°, and extends along the inside sidewall part. The outer rear extending part 123 is continuous with a radial-direction end part of the outside part 122c of the second U-shaped part 122, gently bends in the rearward circumferential direction at an angle of approximately 90°, and extends along the outside sidewall part.

An inner front connecting part 1211 comprising a reinforced hole elongated along the radial direction of the tire is formed in a front end part of the inner front extending part 121. An outer rear connecting part 1232 comprising a reinforced hole elongated along the radial direction of the tire is formed in a rear end part of the outer rear extending part 123.

The orientations of the extending parts or the arrangement of the connecting parts of the first main body 11 and the second main body 12 are thus inverted with respect to the circumferential direction, and the other portions thereof therefore have basically the same form but are not identical members. Details common to both the first main body and the second main body will be described below mainly using the first main body, and descriptions relating to the second main body are omitted as appropriate.

### (2) Inside band-shaped connecting body

The inside band-shaped connecting body 13 comprises a first inner belt 131, a second inner belt 132, and an inner length adjustment element 133 (so-called strap adjuster).

The distal end of an inner front end part 1311 of the first inner belt 131 is inserted through the inner rear connecting part 1112 of the first main body 11 and then sewn to the first inner belt 131, and the inner front end part 1311 is thereby attached by insertion to the inner rear connecting part 1112. The distal end of an inner rear end part 1322 of the second inner belt 132 is inserted through the inner front connecting part 1211 of the second main body 12 and then sewn to the second inner belt 132, and the inner rear end part 1322 is thereby attached by insertion to the inner front connecting part 1211.

The inner length adjustment element 133 is provided between an inner rear end part 1312 of the first inner belt 131 and an inner front end part 1321 of the second inner belt 132, and connects the inner rear end part 1312 and the inner front end part 1321 while adjusting the interval (connection length) between the inner rear connecting part 1112 and the inner front connecting part 1211. The inner length adjustment element 133 is configured, specifically, as a ladder ring shape having a forward support column 1331, a rearward support column 1332, and a center support column 1333 which are connected by an outer frame, a forward ring is formed between the forward support column 1331 and the center support column 1333, and a rearward ring is formed between the rearward support column 1332 and the center support column 1333.

The inner rear end part 1312 of the first inner belt 131 is bent by the center support column 1333 and inserted in the forward ring and held between the forward support column 1331 and the first inner belt 131, and is thereby attached by insertion to a front side of the inner length adjustment element 133. The distal end of the inner front end part 1321 of the second inner belt 132 is inserted through the rearward ring of the inner length adjustment element 133 and then sewn to the second inner belt 132, and the inner front end part 1321 is thereby attached by insertion to the inner length adjustment element 133 (rearward support column 1332).

Here, because the inner rear end part 1312 is not joined to the first inner belt 131 the insertion position thereof can be freely changed, and the connection length (interval between the inner rear connecting part 1112 and the inner front connecting part 1211) of the first inner belt 131 and the second inner belt 132 can thereby be adjusted in stepless fashion in a wide range. The inner belts according to the present example comprise chemical fibers or the like (e.g., polypropylene fibers) having excellent strength, durability, weather resistance, and other properties (the outer belts described hereinafter also being configured in the same manner).

### (3) Outside band-shaped connecting body and mounting/detachment connection element

The outside band-shaped connecting body 14 comprises a first outer belt 141, a second outer belt 142, and the mounting/detachment connection element 15. The mounting/detachment connection element 15 is a so-called one-touch buckle, and comprises a male connector 151 and a female connector 152.

The distal end of an outer rear end part 1412 of the first outer belt 141 is inserted through the outer front connecting part 1131 of the first main body 11 and then sewn to the first outer belt 141, and the outer rear end part 1412 is thereby attached by insertion to the outer front connecting part 1131. The distal end of an outer front end part 1411 of the first outer belt 141 is attached by insertion to a male-side connecting part 1511 of the male connector 151. The male-side connecting part 1511 also serves as an outer length adjustment element comprising the same ladder ring shape as the inner length adjustment element 133. The connection length (interval between the outer front connecting part 1131 and an outer rear connecting part 2232) between the male connector 151 and the outer front connecting part 1131 of the first main body 11 is also adjustable in stepless fashion in a wide range by the male-side connecting part 1511.

The distal end of an outer front end part 1421 of the second outer belt 142(242) is inserted through the outer rear connecting part 1232 of the second main body 12 and then sewn to the second outer belt 142, and the outer front end part 1421 is thereby attached by insertion to the outer rear connecting part 1232. The distal end of an outer rear end part 1422(2422) of the second outer belt 142(242) is inserted through a ring-shaped female-side connecting part 152(252) and then sewn to the second outer belt 142(242), and the outer rear end part 1422 is thereby attached by insertion to the female-side connecting part 1522(2522).

As illustrated in FIG. 3, the mounting/detachment connection element 15 comprises the fork-shaped male connector 151 having three protrusions, and the cylindrical female connector 152(252) for including the three protrusions of the male connector 151. Both outside protrusions 1513 of the male connector 151 elastically widen and catch on notches 1523(2523) provided in both sides at the middle of the female connector 152(252), and the male connector 151 and the female connector 152(252) are thereby joined together. Conversely, by elastically narrowing the protrusions 1513, the male connector 151 and the female connector 152(252) are disconnected from each other.

### [Second Example]

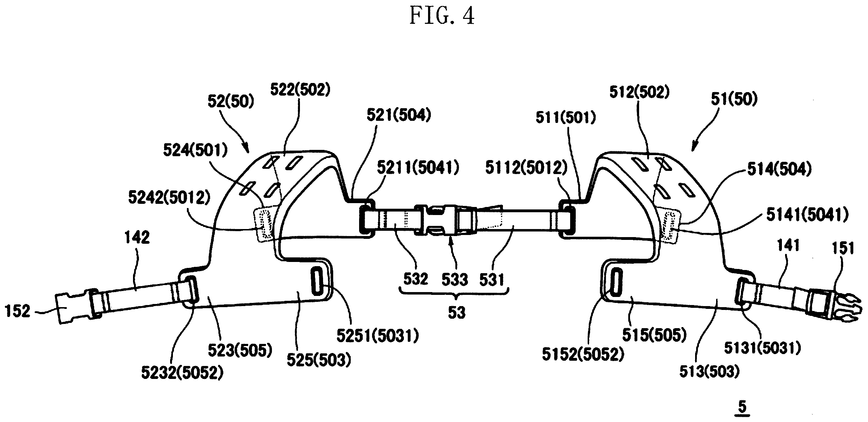

An elementary unit 5 is illustrated in FIG. 4, in which the first main body 11, the second main body 12, and the inside band-shaped connecting body 13 according to the elementary unit 1 are replaced with a first main body 51, a second main body 52, and an inside band-shaped connecting body 53, respectively. The same reference numerals are used to refer to members that are the same as in the elementary unit 1, and no description thereof is given. Other portions not described in detail are basically the same as in the first example. The same also applies for the examples described below.

The first main body 51 and the second main body 52 according to the elementary unit 5 comprise integrated main bodies 50 having the same form. Consequently, there is no need to prepare two types of main bodies, and a single type of main body can be used for both main bodies in the elementary unit 5, and manufacturing cost or management cost is therefore reduced due to the decreased number of components relative to the elementary unit 1(2, 3).

Specifically, the integrated main body 50 has a U-shaped part 502 and four extending parts 501, 503, 504, 505 extending both ways in the circumferential direction in the vicinity of the inner peripheral ends of the U-shaped part 502, and one connecting part 5012, 5031, 5041, 5052 is formed in each of the extending parts. The integrated main body 50 also comprises a wide planar body obtained by integrally molding a hard rubber substantially into a U shape so as to follow the external peripheral shape (substantially U-shaped cross-section) of a tire. However, in contrast with the main bodies 11, 12, the integrated main body 50 is shaped so as to be symmetrical about a center line transversely crossing the middle of the U-shaped part 502 in a wheel axis direction and a center line longitudinally crossing the tire T in the outer circumferential direction (direction orthogonal to the wheel axis direction) thereof (i.e., symmetrical in the rear-front direction and the outside-inside direction).

In a case in which the integrated main body 50 is used as the first main body 51, the extending part 501 constitutes an inner rear extending part 511, the U-shaped part 502 is a first U-shaped part 512, the extending part 503 constitutes an outer front extending part 513, the connecting part 5012 constitutes an inner rear connecting part 5112, and the connecting part 5031 constitutes an outer front connecting part 5131, the same as in the first main body 11. However, in this case, an inner front connecting part 5141 comprising a connecting part 5041 and an inner front extending part 514 comprising the extending part 504, and an outer rear connecting part 5152 comprising a connecting part 5052 and an outer rear extending part 515 comprising the extending part 505 function as retaining parts (contacting parts) for further enhancing retention of the first main body 51 on the tire.

In a case in which the integrated main body 50 is configured as the second main body 52, the extending part 504 constitutes an inner front extending part 521, the U-shaped part 502 is a second U-shaped part 522, the extending part 505 constitutes an outer rear extending part 523, the connecting part 5041 constitutes an inner front connecting part 5211, and the connecting part 5052 constitutes an outer rear connecting part 5232, the same as in the second main body 12. However, in this case, an inner rear connecting part 5242 comprising a connecting part 5012 and an inner rear extending part 524 comprising the extending part 501, and an outer front connecting part 5251 comprising a connecting part 5031 and an outer front extending part 525 comprising the extending part 503 function as retaining parts for further enhancing retention of the second main body 52 on the tire.

The first main body 51 and the second main body 52 can be connected using the inside band-shaped connecting body 13 in the elementary unit 5 as well, the same as in the elementary unit 1, but the present example is of a case in which the inside band-shaped connecting body 53 is used. The inside band-shaped connecting body 53 comprises a first inner belt 531, a second inner belt 532, and an inner length adjustment element 533. The first inner belt 531 and the second inner belt 532 are essentially the same as the first inner belt 131 and the second inner belt 132, respectively. The inner length adjustment element 533 represents a change of the inner length adjustment element 133 (strap adjuster) to a one-touch buckle which is the same as the mounting/detachment connection element 15.

### [Third Example]

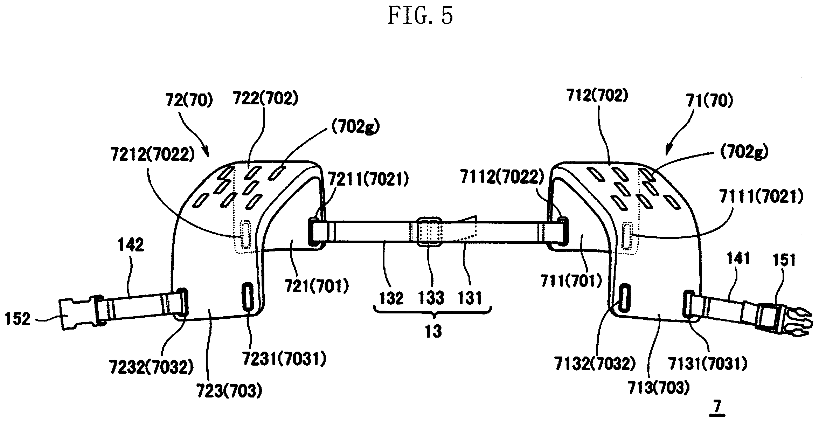

An elementary unit 7 is illustrated in FIG. 5, in which the first main body 11 and the second main body 12 according to the elementary unit 1 are replaced with a first main body 71 and a second main body 72, respectively.

The first main body 71 and the second main body 72 according to the elementary unit 7 both comprise integrated main bodies 70. This integrated main body 70 has a simpler shape than the integrated main body 50 described above. Using the elementary unit 7 comprising the integrated main body 70 makes it possible to further reduce manufacturing cost or management cost in comparison not only with using the elementary unit 1(2, 3), but also with using the elementary unit 5.

Specifically, the integrated main body 70 comprises an inside part 701 serving also as an inside extending part (inside front extending part and inner rear extending part), a transverse part 702 as a grounding planar part, and an outside part 703 serving also as an outside extending part (outer front extending part and outer rear extending part). The inside part 701 extends along the inside sidewall part of the tire in the radial direction and the circumferential direction thereof. The transverse part 702 is continuous with the inside part 701 and gently bends to the outside at an angle of approximately 90°, and crosses the tread part of the tire and extends in the circumferential direction along the external peripheral surface thereof. The outside part 703 gently bends at an angle of approximately 90° from the transverse part 702, and extends in the radial direction and the circumferential direction along the outside sidewall part. The integrated main body 70 also comprises a wide planar body obtained by integrally molding a hard rubber substantially into a U shape so as to follow the external peripheral shape (substantially U-shaped cross-section) of a tire, and has a shape which is symmetrical in the rear-front direction and the outside-inside direction.

The inside part 701 has connecting parts 7021, 7022 on the front and rear sides, respectively, thereof in the vicinity of the inner circumferential end thereof, and the outside part 703 has connecting parts 7031, 7032 on the front and rear sides, respectively, thereof in the vicinity of the inner circumferential end thereof. The outermost surface of the transverse part 702 becomes a grounding surface during mounting to the tire, and the transverse part 702 is therefore configured so as to have a greater thickness than other portions. A plurality of elongated anti-skid grooves 702g extending in the axial direction of the wheel are formed on the outermost surface of the transverse part 702.

In a case in which the integrated main body 70 is used as the first main body 71, the inside part 701 constitutes an inside part 711, the outside part 703 constitutes an outside part 713, the connecting part 7022 constitutes an inner rear connecting part 7112, and the connecting part 7031 constitutes an outer front connecting part 7131. In this case as well, the inner front connecting part 7111 and vicinity thereof comprising the connecting part 7021, and the outer rear connecting part 7132 and vicinity thereof comprising the connecting part 7032 function as retaining parts for enhancing retention of the first main body 71 on the tire, the same as in the integrated main body 50.

In a case in which the integrated main body 70 is used as the second main body 72, the inside part 701 constitutes an inside part 721, the outside part 703 constitutes an outside part 723, the connecting part 7021 constitutes an inner front connecting part 7211, and the connecting part 7032 constitutes an outer rear connecting part 7232. In this case as well, the inner rear connecting part 7212 and vicinity thereof comprising the connecting part 7022, and the outer front connecting part 7231 and vicinity thereof comprising the connecting part 7031 function as retaining parts for enhancing retention of the second main body 72 on the tire, the same as in the integrated main body 50.

### [Other Examples]

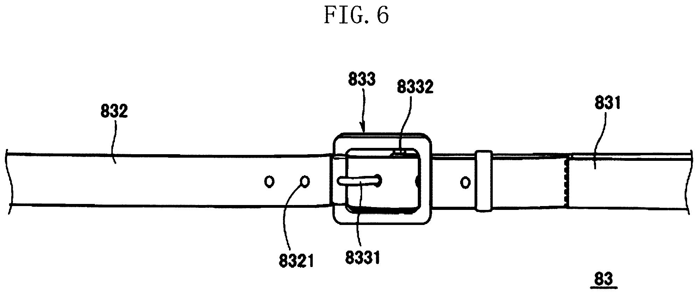

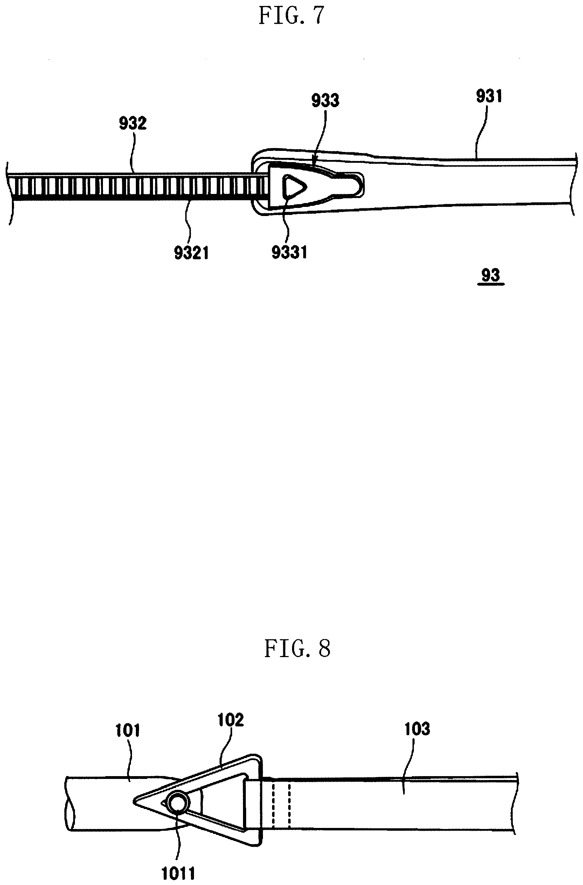

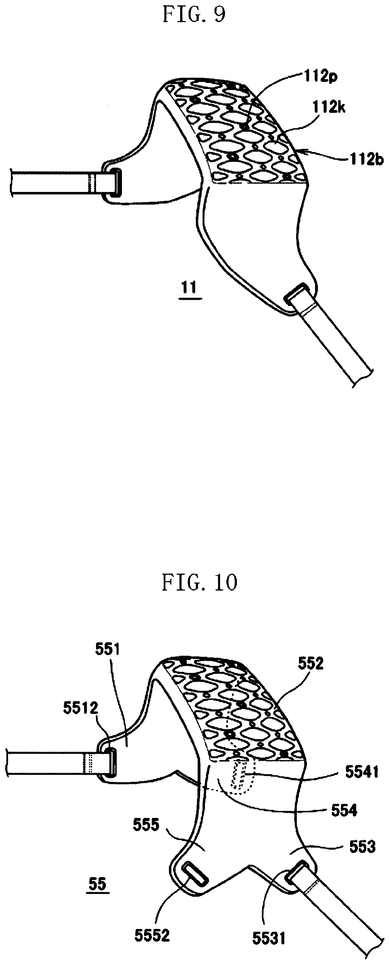

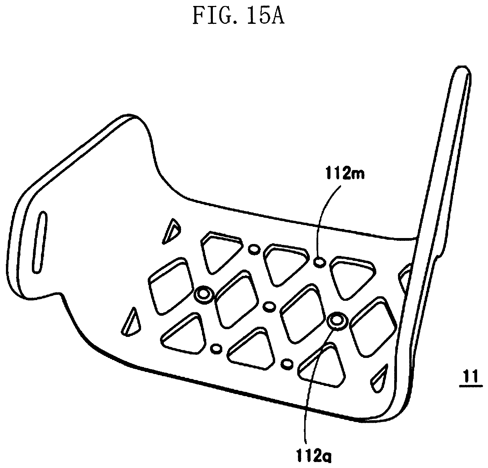

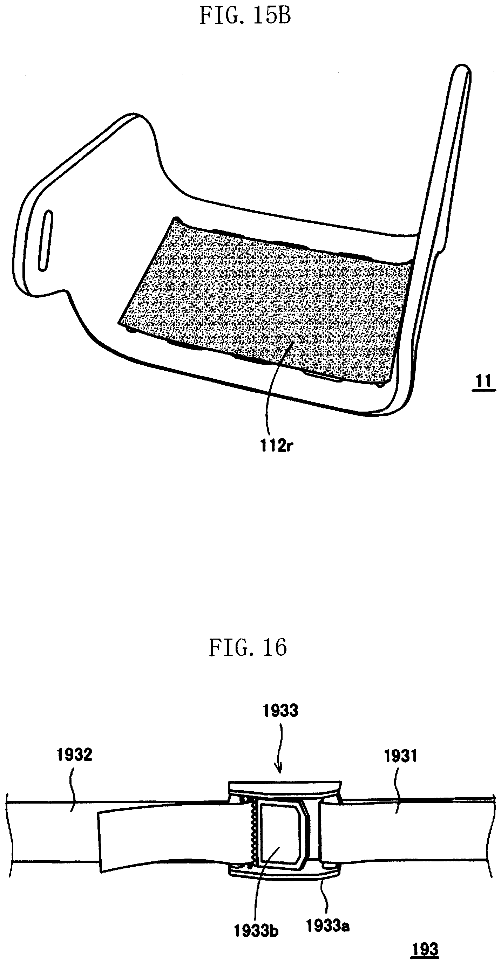

(1) The inside band-shaped connecting body (including the inner length adjustment element) and/or the outside band-shaped connecting body (including the mounting/detachment connection element) described above may be configured as a band-shaped connecting body 83 such as is shown in FIG. 6. The band-shaped connecting body 83 comprises a first belt 831, a second belt 832, and a connection adjustment element 833 comprising a belt buckle. One end part of the first belt 831 is attached by insertion to a middle support column 8332 fixed to a frame body of the connection adjustment element 833. A plurality of latching holes 8321 are provided at a predetermined pitch in one end part of the second belt 832. A latching hook 8331 pivotally supported by the middle support column 8332 of the connection adjustment element 833 is fitted by insertion into one of the latching holes 8321. By changing the position of the latching hole 8321 into which the latching hook 8331 is fitted by insertion, the first belt 831 and the second belt 832 are connected while the connection length is adjusted in stepped fashion.
(2) The inside band-shaped connecting body (including the inner length adjustment element) and/or the outside band-shaped connecting body (including the mounting/detachment connection element) may be configured as a band-shaped connecting body 93 such as is shown in FIG. 7. The band-shaped connecting body 93 comprises a first belt 931, a second belt 932, and a connection adjustment element 933 which is a ratchet buckle. The lever-shaped connection adjustment element 933 is pivotally supported by one end part of the first belt 931. A plurality of projections 9321 are provided at a predetermined pitch at one end of the second belt 932. When a pawl 9331 (protruding toward the back of the paper in FIG. 7) of the connection adjustment element 933 latches on the projections 9321, the first belt 931 and the second belt 932 are connected while the connection length thereof is adjusted in stepped fashion.
(3) The example described above is of a case in which the connecting parts are integrally molded together with a planar (or band-shaped) main body. Alternatively, as shown, e.g., in FIG. 8, the connecting parts may be configured as a connecting ring 102 or the like, one end part of which is fixed by a rivet 1011 to an extending part 101 of a main body. Through such a configuration, connection by a band-shaped connecting body 103 can easily be performed even when the main body (particularly the extending parts) is not planar (e.g., a rod shape made of a resin or rubber). In addition to being the highly flexible chemical fiber belts described above, the belts may also be made of highly stretchable soft rubber, hard rubber of the same quality as the main bodies, or the like. When there is no need to adjust the connection length, the anti-skid device of the present invention may be configured so that the main bodies and the connecting bodies are integrated at the connecting parts.
(4) Metal stud pins 112p (anti-skid elements) and rhombus-shaped blocks 112k (anti-skid pattern) molded integrally with the transverse part 112b, such as are illustrated in FIG. 9, may be formed on the outer surface of the transverse part 112b of the first main body 11 used in the elementary unit 1. The anti-skid properties of the transverse part 112b comprising a hard rubber integrally molded body can thereby be considerably enhanced. The same effect can also be thereby be obtained for the outer surface of the transverse part 122b of the second main body 12. The same anti-skid pattern or anti-skid elements may be provided to the transverse part (grounding planar part) of the integrated main body 50 or the integrated main body 70 as well.
(5) The integrated main body 50 used in the elementary unit 5 may also be configured as an integrated main body 55 such as is illustrated in FIG. 10. The integrated main body 55 also has a U-shaped part 552 and four extending parts 551, 553, 554, 555 extending both ways in the circumferential direction in the vicinity of the inner peripheral ends of the U-shaped part 552, and one connecting part 5512, 5531, 5541, 5552 is formed in each of the extending parts, the same as in the integrated main body 50. However, in contrast with the integrated main body 50, extending parts which are adjacent in the circumferential direction extend in a branching shape in the integrated main body 55. The main bodies constituting an elementary unit may be kept more stable by changing the extension direction of the extending parts in this manner.

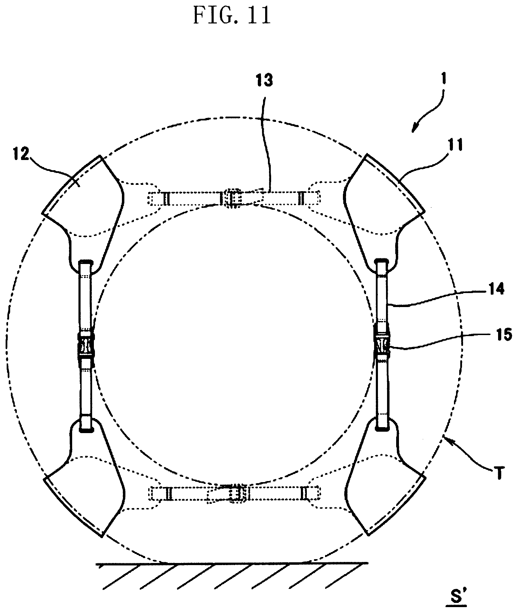

(6) FIG. 11 illustrates the manner in which an anti-skid device S' comprising two sets of elementary units 1 is mounted to a tire T. Adjusting the angles or positions at which the inner rear extending part 111, outer front extending part 113, inner rear connecting part 1112, and outer front connecting part 1131 of the first main body 11, and the inner front extending part 121, outer rear extending part 123, inner front connecting part 1211, and outer rear connecting part 1232 of the second main body 12 illustrated in FIG. 2 and other drawings are formed causes the inside band-shaped connecting body 13 and the outside band-shaped connecting body 14 to be substantially square when the anti-skid device S' is mounted to the tire T, and also makes it possible for the first main body 11 and the second main body 12 to be evenly arranged near the apex angles thereof. Through this configuration, the anti-skid device S' can be more stably mounted to the tire T.

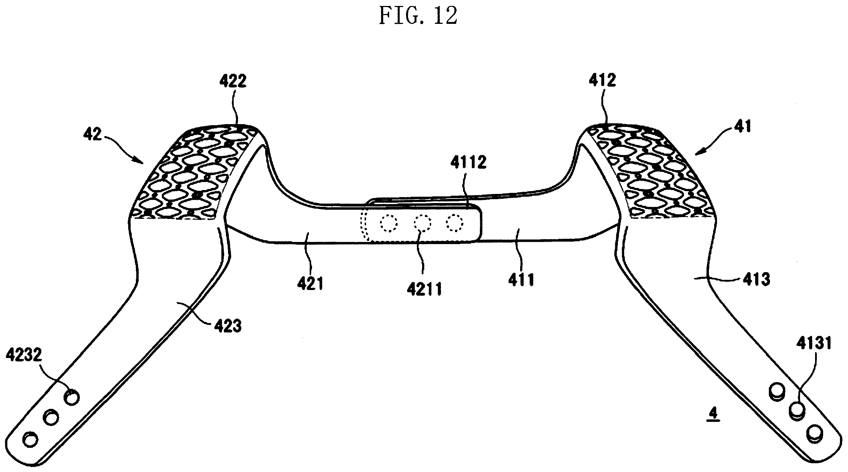

(7) FIG. 12 illustrates an elementary unit 4 comprising main bodies in which an inside connecting body and an outside connecting body are integrated. The elementary unit 4 comprises a first main body 41 and a second main body 42. The first main body 41 has a U-shaped part 412 constituting a principal part, an inner rear extending part 411, and an outer front extending part 413, and the second main body 42 has a U-shaped part 422 constituting a principal part, an inner front extending part 421, and an outer rear extending part 423. In this case, the inner rear extending part 411 of the first main body 41 and the inner front extending part 421 of the second main body 42 also serve as inside connecting bodies, and the outer front extending part 413 of the first main body 41 and the outer rear extending part 423 of the second main body 42 also serve as outside connecting bodies. Portions that are the same as in the elementary unit 1 will not be described in detail.
   A plurality of latching holes 4112 (inner rear connecting parts) are arranged in a distal-end part of the inner rear extending part 411, and the same number of latching protrusions 4211 (inner front connecting parts) fitted into the latching holes 4112 are arranged at the same pitch as the latching holes 4112 in the distal-end part of the inner front extending part 421. The insides of the first main body 41 and the second main body 42 are connected by the fitting of the latching protrusions 4211 into the latching holes 4112. The inside connection length can also easily be changed by changing the engagement position of the latching holes 4112 and the latching protrusions 4211.
   A plurality of latching holes 4232 (outer rear connecting parts) are arranged in a distal-end part of the outer rear extending part 423 as well, and the same number of latching protrusions 4131 (outer front connecting parts) fitted into the latching holes 4232 are arranged at the same pitch as the latching holes 4232 in the distal-end part of the outer front extending part 413. Adjacent latching holes 4232 and latching protrusions 4131 are engaged during mounting on a tire, whereby the adjacent first main body 41 and second main body 42 are connected on the outside, and the anti-skid device comprising the elementary unit 4 is mounted on the tire. In this configuration as well, the outside connection length can easily be changed by changing the engagement position of the latching protrusions 4131 and the latching holes 4232.

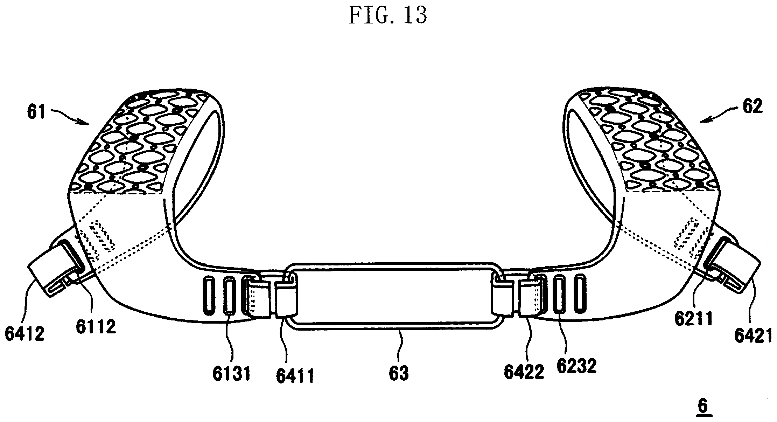

(8) FIG. 13 illustrates an elementary unit 6 in which the belt (band-shaped connecting body) of the elementary unit 1 is changed to a rubber ting (elastic connecting body). The elementary unit 6 comprises a first main body 61, a second main body 62, an outer rubber ring 63 (outside elastic connecting body), an inner rubber ring (inside elastic connecting body/not illustrated), and latching adapters 6411, 6412, 6421, 6422 comprising band-shaped C-shaped rings for latching the rubber rings. The first main body 61 and the second main body 62 have substantially the same shape as the first main body 11 and the second main body 12, respectively, but an inner rear connecting part 6112 and an outer front connecting part 6131 of the first main body 61 and an inner front connecting part 6211 and an outer rear connecting part 6232 of the second main body 62 comprise a plurality of vertical holes (slits).
   The latching adapters 6412, 6411, 6421, 6422 are hooked in the connecting parts 6112, 6131, 6211, 6232, respectively. The elementary unit 6 can easily be mounted to and removed from the tire by latching or releasing the rubber rings (e.g., the outer rubber ring 63) between latching adapters (e.g., between the latching adapter 6411 and the latching adapter 6422) which are adjacent during mounting to the tire. Incidentally, the latching adapters are preferably mounted in the connecting parts so that the back surfaces thereof are toward the tire, in order to ensure engagement with the rubber rings or to prevent damage to the tire or other components. The connecting bodies of the present invention can also be considered to include such latching adapters.
   For convenience of description herein, elementary units in which the main bodies are connected on the outside of the tire are illustrated, but the main bodies are, of course, connected on the inside thereof when the elementary units are mounted to a tire. The present invention is also not limited to a configuration in which the main bodies are both connected by rubber rings on both sides (the inside and the outside) of the tire, and a configuration may be adopted in which one side (particularly the inside) is connected by a belt described above, and the other side (particularly the outside) is connected by a rubber ring.
   When such an elementary unit is used, the anti-skid device can be rapidly and easily mounted to and removed from a tire merely by extension and contraction of the rubber rings. The inside connection length or the outside connection length can also easily be adjusted by changing the engagement position of the latching adapters in the connecting parts. Consequently, insofar as the main bodies (particularly the grounding planar parts) are suitable for the tire width (tread width), a single specification of anti-skid device can be mounted to various tires having different aspect ratios or rim diameters.

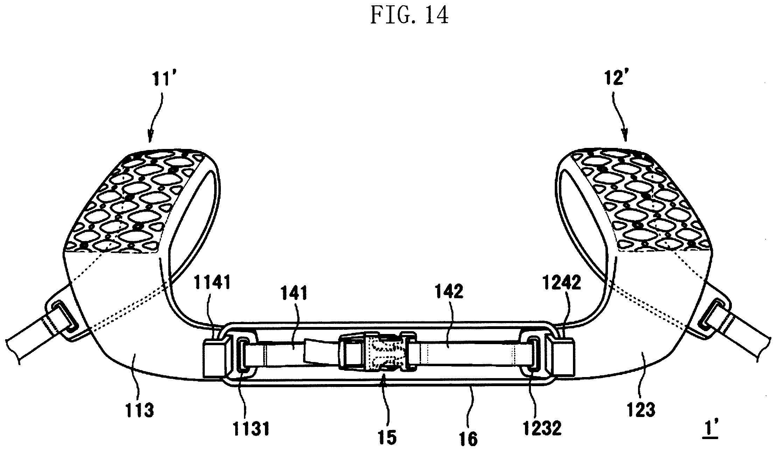

(9) FIG. 14 illustrates an elementary unit 1' in which the connections on the outside of the first main body 11 and the second main body 12 constituting the elementary unit 1 are reinforced. Portions that are the same as in the elementary unit 1 will not be described in detail.
   In the elementary unit 1', the first main body 11 of the elementary unit 1 is configured as a first main body 11' having a latching hook 1141 near the rear of the outer front connecting part 1131, and the second main body 12 is configured as a second main body 12' having a latching hook 1242 near the front of the outer rear connecting part 1232. In addition to connection by the first outer belt 141, second outer belt 142, and mounting/detachment connection element 15, the elementary unit 1' is configured so as to be further capable of latching of an outer rubber ring 16 on the latching hook 1141 and the latching hook 1242. The outer rubber ring 16 is extended and latched on the latching hook 1141 and the latching hook 1242, and the elementary unit 1' (and consequently, the anti-skid device) is thereby more securely mounted on the tire. The latching hooks may be integrally molded as portions of the main bodies, or may be hook-shaped metal fittings or the like separately fixed to the integrally molded main bodies.
   Incidentally, latching of the outer rubber ring 16 need only be performed selectively when needed according to road surface conditions. Latching of the rubber ring such as described above may be performed for each space between adjacent latching hooks, but a single rubber ring may also be latched onto all latching hooks (four latching hooks when two sets of elementary units are used) on the outside. A plurality of rubber rings may also be used on top of one another as needed.
   The latching hooks described above can also be considered to be connecting parts (or component portions thereof), and the rubber rings latched thereon can be considered to be connecting bodies (or component portions thereof).
(10) As illustrated in FIG. 15A, locking projections 112m molded integrally with the transverse part 112b and metal locking pins 112q (locking elements) may be provided on the inner surface of the transverse part 112b of the first main body 11 used in the elementary unit 1. Alternatively, an anti-skid sheet 112r (locking element) such as is illustrated in FIG. 15B may be bonded to the inner surface of the transverse part 112b. By these measures, the first main body 11 is more stably retained on the external peripheral surface of the tire T even during travel. The same locking projections or locking elements may be provided also to the internal peripheral side of the transverse part (grounding planar part) of the second main body 12, the integrated main body 50, or the integrated main body 70.
(11) The inside band-shaped connecting body (including the inner length adjustment element) and/or the outside band-shaped connecting body (including the mounting/removal connection element) may be configured as a band-shaped connecting body 193 such as is shown in FIG. 16. The band-shaped connecting body 193 comprises a first belt 1931, a second belt 1932, and a cam buckle 1933 (connection adjustment element). The cam buckle 1933 comprises a housing 1933a, a latching cam 1933b pivotally provided to the housing 1933a and urged in one direction (locking direction), and a spring (not illustrated) for urging the latching cam 1933b. One end part of the first belt 1931 is connected by sewing to one end of the housing 1933a. One end of the second belt 1932 is inserted in the other end of the housing 1933a, and is held and latched (locked) between the housing 1933a and the latching cam 1933b. When the latching cam 1933b is rotated in the other direction against the urging force, the one end of the second belt 1932 is released, and the connection length of the first belt 1931 and the second belt 1932 can be adjusted or the first belt 1931 and second belt 1932 can be separated (detached). The use of such a cam buckle 1933 makes it possible to easily and reliably fasten the first belt 1931 and the second belt 1932 while steplessly adjusting the connection length thereof.

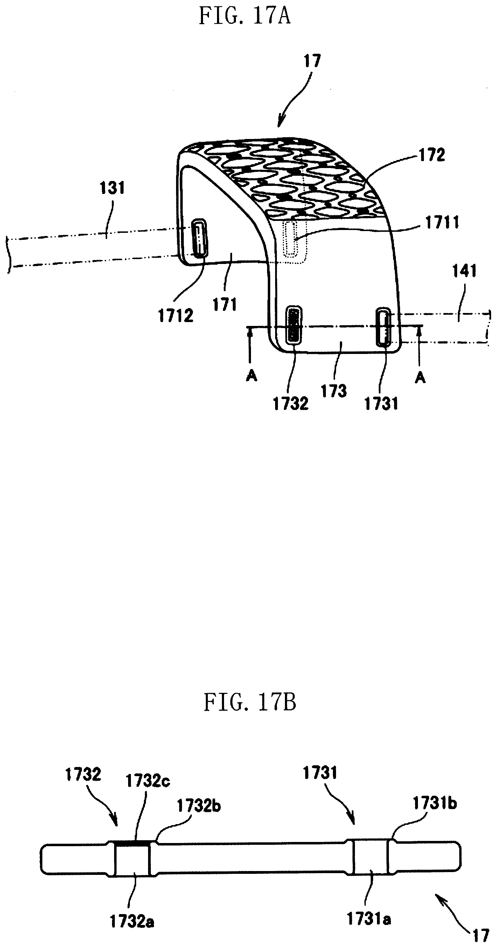

(12) FIG. 17A illustrates an integrated main body 17 as a modification of the integrated main body 70 used in the third example. FIG. 17B is a sectional view along line A-A in FIG. 17A. The integrated main body 17 has a transverse part 172 facing the tread part of the tire, and a first lateral part 171 and a second lateral part 173 facing the sidewall part of the tire, the same as the integrated main body 70. Connecting parts 1711, 1712 are provided at the front and rear on an inner peripheral side of the first lateral part 171, and connecting parts 1731, 1732 are provided at the front and rear on the inner peripheral side of the second lateral part 173. The integrated main body 17 has the same symmetrical shape as the integrated main body 70, the first lateral part 171 and the second lateral part 173 have the same form, and the four connecting parts 1711, 1712, 1731, 1732 also all have the same form.

The connecting parts of the integrated main body 17 basically comprise vertically elongated holes through which band-shaped connecting bodies (e.g., the inside band-shaped connecting body 131, the outside band-shaped connecting body 141, and other band-shaped connecting bodies) can be inserted. However, in the stage where the integrated main body 17 is integrally molded from a rubber, resin, or other material, the connecting parts are all in a non-through state due to a thin-walled (or thin-skinned) closure on the outer surface sides thereof. Here, the closures of the connecting parts 1711, 1732 are left in place, and the closures of the connecting parts 1712, 1731 are removed (e.g., perforated), for example. The integrated main body 17 is thereby configured as the first main body according to the present invention, such as illustrated in FIG. 17A. For example, the connecting part 1732 not used in the first main body has a hole part 1732a and an annular rib 1732b for reinforcing the external periphery of the hole part 1732a, and a closure 1732c remains therein, as illustrated in FIG. 17B. It therefore appears at first glance that unnecessary connecting parts (through holes) are not formed. Meanwhile, the connecting part 1731 comprises a penetrating hole part 1731a from which a closure 1731c (not illustrated) is removed, and an annular rib 1731b for reinforcing the periphery of the hole part 1731a, and the band-shaped connecting body 141 or the like is insertable through the connecting part 1731.

The integrated main body 17 can also be configured as the second main body according to the present invention by removing the closures of the connecting parts 1711, 1732 and leaving the closures of the connecting parts 1712, 1731 in place. Leaving closures in place in this manner eliminates unnecessary through holes and enhances the design of the main bodies, and consequently, of the anti-skid device. The closures of the connecting parts may also be removed in advance of delivery, or the user may remove the closures after delivery. Connecting parts in a non-through state are also thus included among the connecting parts according to the present invention.

### [Key]

- S: tire anti-skid device
- 1: elementary unit
- 11: first main body
- 12: second main body
- 13: inside band-shaped connecting body
- 15: mounting/removal connection element

## Claims

1. A main body for a tire anti-skid device **characterized by** comprising:
a first main body (11) having a first grounding planar part extending in a circumferential direction of a tire while facing a tread part of the tire, the tire being fitted to a vehicle wheel, an inner rear connecting part (1112) provided on a rear side of the first grounding planar part on an inside of the tire, and an outer front connecting part (1131) provided on a front side of the first grounding planar part on an outside of the tire; and
a second main body (12) arranged to the rear of the first main body (11), having a second grounding planar part extending in the circumferential direction of the tire while facing the tread part, an inner front connecting part (1211) provided on a front side of the second grounding planar part on the inside of the tire, and an outer rear connecting part (1232) provided on a rear side of the second grounding planar part on the outside of the tire;
wherein the term "inside" refers to a side configured to be a vehicle side, the term "outside" refers to a side configured to be a non-vehicle side, and the term "front" and "rear" refer to a direction in which the tire rotates during forward travel;
said first main body (11) being a first U-shaped main body (112) substantially U-shaped in cross-section and having a first inside planar part (112a) continuous with an inside shoulder part of said first grounding planar part and extending in the circumferential direction while facing an inside sidewall part of said tire, and a first outside planar part (112c) continuous with an outside shoulder part of the first grounding planar part and extending in the circumferential direction while facing an outside sidewall part of the tire;
said second main body (12) being a second U-shaped main body (122) substantially U-shaped in cross-section and having a second inside planar part (122a) continuous with an inside shoulder part of said second grounding planar part and extending in the circumferential direction while facing the inside sidewall part, and a second outside planar part (122c) continuous with an outside shoulder part of the second grounding planar part and extending in the circumferential direction while facing the outside sidewall part;
an included angle between front and rear ends in the circumferential direction of said first grounding planar part or said second grounding planar part and a center of rotation of the tire being 10° to 60°; and
the inner rear connecting part (1112) of the first main body (11) and the inner front connecting part (1211) of the second main body (12) being connectable;
**characterized in that**:
the first main body (11) comprises an elastic material and the second main body (12) comprises an elastic material;
wherein said elastic material is a rubber or a resin.

2. A tire anti-skid device comprising the main body according to claim 1.

3. The tire anti-skid device according to claim 2, wherein said included angle is 20° to 50°.

4. The tire anti-skid device according to claim 2 or 3, wherein
said inner rear connecting part (1112) is provided to a rear part of the first inside planar part;
said outer front connecting part (1131) is provided to a front part of the first outside planar part;
said inner front connecting part (1211) is provided to a front part of the second inside planar part; and
said outer rear connecting part (1232) is provided to a rear part of the second outside planar part.

5. The tire anti-skid device according to claim 2 or 3, wherein
said first main body (11) has an inner rear extending part (111) extending rearward of said first inside planar part, and an outer front extending part (113) extending forward of said first outside planar part;
said second main body (12) has an inner front extending part (121) extending forward of said second inside planar part, and an outer rear extending part (123) extending rearward of the second outside planar part;
said inner rear connecting part (1112) is provided to the inner rear extending part (111);
said outer front connecting part (1131) is provided to the outer front extending part (113);
said inner front connecting part (1211) is provided to the inner front extending part (121); and
said outer rear connecting part (1232) is provided to the outer rear extending part (123).

6. The tire anti-skid device according to any of claims 2 through 5, wherein
said first main body (11) and said second main body (12) comprise:
a grounding planar part constituting said first grounding planar part or said second grounding planar part; and
integrated main bodies having four connecting parts constituting any of said inner rear connecting part (1112), said outer front connecting part (1131), said inner front connecting part (1211), or said outer rear connecting part (1232).

7. The tire anti-skid device according to any of claims 2 through 6, further comprising an inside connecting body (13) for connecting said inner rear connecting part (1112) and said inner front connecting part (1211);
the inside connecting body (13) being flexible or stretchable.

8. The tire anti-skid device according to claim 7, wherein said inside connecting body (13) is an inside band-shaped connecting body.

9. The tire anti-skid device according to claim 7 or 8, wherein said inside connecting body (13) comprises an inner length adjustment element (133) for adjusting a connection length.

10. The tire anti-skid device according to any of claims 2 through 9, further comprising an outside connecting body connected to said outer front connecting part (1131) or said outer rear connecting part (1232);
the outside connecting body (15) being flexible or stretchable.

11. The tire anti-skid device according to claim 10, wherein said outside connecting body (15) is an outside band-shaped connecting body.

12. The tire anti-skid device according to claim 10 or 11, wherein said outside connecting body (15) comprises an outer length adjustment element for adjusting a connection length.

13. The tire anti-skid device according to any of claims 2 through 12, further comprising a mounting/removal connection element having one end part thereof connected to said outer front connecting part (1131) and the other end part thereof connected to said outer rear connecting part (1232), the mounting/removal connection element being capable of detachable connection between the one end part and the other end part.

14. The tire anti-skid device according to any of claims 2 through 13, wherein said first grounding planar part or said second grounding planar part has anti-skid projections or anti-skid elements on an external peripheral side thereof.

15. The tire anti-skid device according to any of claims 2 through 14, wherein said first grounding planar part or said second grounding planar part has locking projections or locking elements on an internal peripheral side thereof.

16. The tire anti-skid device according to claim 2, wherein said first main body (11) and said second main body (12) comprise integrally molded bodies of said rubber or said resin.

17. The tire anti-skid device according to any of claims 2 through 16, wherein two or more elementary units, in which said first main body (11) and said second main body (12) are connected between said inner rear connecting part and said inner front connecting part, are connected between an outer front connecting part of one adjacent elementary unit and an outer rear connecting part of the other adjacent elementary unit.

## Patentansprüche

1. Hauptkörper für eine Reifengleitschutzvorrichtung, **gekennzeichnet durch** umfassend:
einen ersten Hauptkörper (11) mit einem ersten ebenen Erdungsteil, das sich in einer Umfangsrichtung eines Reifens erstreckt, während es einem Laufflächenteil des Reifens zugewandt ist, wobei der Reifen an einem Fahrzeugrad angebracht ist, einem inneren hinteren Verbindungsteil (1112), das an einer Rückseite des ersten ebenen Erdungsteils an einer Innenseite des Reifens bereitgestellt ist, und einem äußeren vorderen Verbindungsteil (1131), das an einer Vorderseite des ersten ebenen Erdungsteils an einer Außenseite des Reifens bereitgestellt ist; und
einen zweiten Hauptkörper (12), der an der Rückseite des ersten Hauptkörpers (11) angeordnet ist, der ein zweites ebenes Erdungsteil aufweist, das sich in der Umfangsrichtung des Reifens erstreckt, während es dem Laufflächenteil zugewandt ist, einem inneren vorderen Verbindungsteil (1211), das an einer Vorderseite des zweiten ebenen Erdungsteils an der Innenseite des Reifens bereitgestellt ist, und einem äußeren hinteren Verbindungsteil (1232), das an einer Rückseite des zweiten ebenen Erdungsteils an der Außenseite des Reifens bereitgestellt ist;
wobei sich der Begriff "Innenseite" auf eine Seite bezieht, die konfiguriert ist, um eine Fahrzeugseite zu sein, der Begriff "Außenseite" sich auf eine Seite bezieht, die konfiguriert ist, um eine Nicht-Fahrzeugseite zu sein, und der Begriff "Vorderseite" und "Rückseite" sich auf eine Richtung bezieht, in die der Reifen während einer Vorwärtsfahrt dreht;
wobei der erste Hauptkörper (11) ein erster U-förmiger Hauptkörper (112) mit einem im Wesentlichen U-förmigen Querschnitt ist und ein erstes inneres ebenes Teil (112a) aufweist, das mit einem inneren Schulterteil des ersten ebenen Erdungsteils fortlaufend ist und sich in der Umfangsrichtung erstreckt, während es einem inneren Seitenwandteil des Reifens zugewandt ist, und ein erstes äußeres ebenes Teil (112c), das mit einem äußeren Schulterteil des ersten ebenen Erdungsteils fortlaufend ist und sich in der Umfangsrichtung erstreckt, während es einem äußeren Seitenwandteil des Reifens zugewandt ist;
der zweite Hauptkörper (12) ein zweiter U-förmiger Hauptkörper (122) mit einem im Wesentlichen U-förmigen Querschnitt ist und ein zweites inneres ebenes Teil (122a) aufweist, das mit einem inneren Schulterteil des zweiten ebenen Erdungsteils fortlaufend ist und sich in der Umfangsrichtung erstreckt, während es dem inneren Seitenwandteil zugewandt ist, und ein zweites äußeres ebenes Teil (122c), das mit einem äußeren Schulterteil des zweiten ebenen Erdungsteils fortlaufend ist und sich in der Umfangsrichtung erstreckt, während es dem äußeren Seitenwandteil zugewandt ist;
ein eingeschlossener Winkel zwischen vorderen und hinteren Enden in der Umfangsrichtung des ersten ebenen Erdungsteils oder des zweiten ebenen Erdungsteils und ein Drehzentrum des Reifens 10 ° bis 60 ° ist; und
das innere hintere Verbindungsteil (1112) des ersten Hauptkörpers (11) und das innere vordere Verbindungsteil (1211) des zweiten Hauptkörpers (12) verbindbar sind;
**dadurch gekennzeichnet, dass**:
der erste Hauptkörper (11) ein elastisches Material umfasst und der zweite Hauptkörper (12) ein elastisches Material umfasst;
wobei das elastische Material ein Gummi oder ein Harz ist.

2. Reifengleitschutzvorrichtung, umfassend den Hauptkörper nach Anspruch 1.

3. Reifengleitschutzvorrichtung nach Anspruch 2, wobei der eingeschlossene Winkel 20 ° bis 50 ° ist.

4. Reifengleitschutzvorrichtung nach Anspruch 2 oder 3, wobei
das innere hintere Verbindungsteil (1112) an einem hinteren Teil des ersten inneren ebenen Teils bereitgestellt ist;
das äußere vordere Verbindungsteil (1131) an einem vorderen Teil des ersten äußeren ebenen Teils bereitgestellt ist;
das innere vordere Verbindungsteil (1211) an einem vorderen Teil des zweiten inneren ebenen Teils bereitgestellt ist; und
das äußere hintere Verbindungsteil (1232) an einem hinteren Teil des zweiten äußeren ebenen Teils bereitgestellt ist.

5. Reifengleitschutzvorrichtung nach Anspruch 2 oder 3, wobei
der erste Hauptkörper (11) ein inneres, sich nach hinten erstreckendes Teil (111), das sich vom ersten inneren ebenen Teil nach hinten erstreckt, und ein äußeres, sich nach vorne erstreckendes Teil (113), das sich vom ersten äußeren ebenen Teil nach vorne erstreckt, aufweist;
der zweite Hauptkörper (12) ein inneres, sich nach vorne erstreckendes Teil (121), das sich vom zweiten inneren ebenen Teil nach vorne erstreckt, und ein äußeres, sich nach hinten erstreckendes Teil (123), das sich vom zweiten äußeren ebenen Teil nach hinten erstreckt, aufweist;
das innere hintere Verbindungsteil (1112) am inneren, sich nach hinten erstreckenden Teil (111) bereitgestellt ist;
das äußere vordere Verbindungsteil (1131) am äußeren, sich nach vorne erstreckenden Teil (113) bereitgestellt ist;
das innere vordere Verbindungsteil (1211) am inneren, sich nach vorne erstreckenden Teil (121) bereitgestellt ist; und
das äußere hintere Verbindungsteil (1232) am äußeren, sich nach hinten erstreckenden Teil (123) bereitgestellt ist.

6. Reifengleitschutzvorrichtung nach einem der Ansprüche 2 bis 5, wobei der erste Hauptkörper (11) und der zweite Hauptkörper (12) umfassen:
ein ebenes Erdungsteil, das das erste ebene Erdungsteil oder das zweite ebene Erdungsteil darstellt; und
integrierte Hauptkörper, die vier Verbindungsteile aufweisen, die eines des inneren hinteren Verbindungsteils (1112), des äußeren vorderen Verbindungsteils (1131), des inneren vorderen Verbindungsteils (1211) oder des äußeren hinteren Verbindungsteils (1232) darstellen.

7. Reifengleitschutzvorrichtung nach einem der Ansprüche 2 bis 6, weiter umfassend einen innenseitigen Verbindungskörper (13) zum Verbinden des inneren hinteren Verbindungsteils (1112) und des inneren vorderen Verbindungsteils (1211);
wobei der innenseitige Verbindungskörper (13) flexibel oder dehnbar ist.

8. Reifengleitschutzvorrichtung nach Anspruch 7, wobei der innenseitige Verbindungskörper (13) ein innenseitiger bandförmiger Verbindungskörper ist.

9. Reifengleitschutzvorrichtung nach Anspruch 7 oder 8, wobei der innenseitige Verbindungskörper (13) ein Innenlängeneinstellungselement (133) zum Einstellen einer Verbindungslänge umfasst.

10. Reifengleitschutzvorrichtung nach einem der Ansprüche 2 bis 9, weiter umfassend einen außenseitigen Verbindungskörper, der mit dem äußeren vorderen Verbindungsteil (1131) oder dem äußeren hinteren Verbindungsteil (1232) verbunden ist;
wobei der außenseitige Verbindungskörper (15) flexibel oder dehnbar ist.

11. Reifengleitschutzvorrichtung nach Anspruch 10, wobei der außenseitige Verbindungskörper (15) ein außenseitiger bandförmiger Verbindungskörper ist.

12. Reifengleitschutzvorrichtung nach Anspruch 10 oder 11, wobei der außenseitige Verbindungskörper (15) ein Außenlängeneinstellungselement zum Einstellen einer Verbindungslänge umfasst.

13. Reifengleitschutzvorrichtung nach einem der Ansprüche 2 bis 12, weiter umfassend ein Montage-/Entfernungsverbindungselement von dem ein Endteil davon mit dem äußeren vorderen Verbindungsteil (1131) verbunden ist und das andere Endteil davon mit dem äußeren hinteren Verbindungsteil (1232) verbunden ist, wobei das Montage-/Entfernungsverbindungselement zu einer lösbaren Verbindung zwischen dem einen Endteil und dem anderen Endteil imstande ist.

14. Reifengleitschutzvorrichtung nach einem der Ansprüche 2 bis 13, wobei das erste ebene Erdungsteil oder das zweite ebene Erdungsteil Gleitschutzvorsprünge oder Gleitschutzelemente an einer externen peripheren Seite davon aufweist.

15. Reifengleitschutzvorrichtung nach einem der Ansprüche 2 bis 14, wobei das erste ebene Erdungsteil oder das zweite ebene Erdungsteil Verriegelungsvorsprünge oder Verriegelungselemente an einer inneren peripheren Seite davon aufweist.

16. Reifengleitschutzvorrichtung nach Anspruch 2, wobei der erste Hauptkörper (11) und der zweite Hauptkörper (12) angeformte Körper aus dem Gummi oder dem Harz umfassen.

17. Reifengleitschutzvorrichtung nach einem der Ansprüche 2 bis 16, wobei zwei oder mehr elementare Einheiten, in welchen der erste Hauptkörper (11) und der zweite Hauptkörper (12) zwischen dem inneren hinteren Verbindungsteil und dem inneren vorderen Verbindungsteil verbunden sind, zwischen einem äußeren vorderen Verbindungsteil einer benachbarten elementaren Einheit und einem äußeren hinteren Verbindungsteil der anderen benachbarten elementaren Einheit verbunden sind.

## Revendications

1. Corps principal pour un dispositif antidérapage de pneu, **caractérisé en ce qu'**il comprend :
un premier corps principal (11) ayant une première partie planaire de contact au sol s'étendant dans une direction circonférentielle d'un pneu tout en étant en regard d'une partie de roulement du pneu, le pneu étant monté sur une roue de véhicule, une partie de raccordement arrière interne (1112) disposée sur un côté arrière de la première partie planaire de contact au sol sur un intérieur du pneu, et une partie de raccordement avant externe (1131) disposée sur un côté avant de la première partie planaire de contact au sol sur un extérieur du pneu ; et
un second corps principal (12) agencé sur l'arrière du premier corps principal (11), ayant une seconde partie planaire de contact au sol s'étendant dans la direction circonférentielle du pneu tout en étant en regard de la partie de roulement, une partie de raccordement avant interne (1211) disposée sur un côté avant de la seconde partie planaire de contact au sol à l'intérieur du pneu, et une partie de raccordement arrière externe (1232) disposée sur un côté arrière de la seconde partie planaire de contact au sol à l'extérieur du pneu ;
dans lequel le terme « interne » se réfère à un côté configuré pour être un côté du véhicule, le terme « externe » se réfère à un côté configuré pour être un côté hors véhicule et les termes « avant » et « arrière » se réfèrent à une direction dans laquelle le pneu tourne au cours du déplacement en avant ;
ledit premier corps principal (11) étant un premier corps principal en forme de U (112) sensiblement en forme de U en coupe transversale et ayant une première partie planaire interne (112a) continue avec une partie d'épaulement interne de ladite première partie planaire de contact au sol et s'étendant dans la direction circonférentielle tout en étant en regard d'une partie de paroi latérale interne dudit pneu, et une première partie planaire externe (112c) continue avec une partie d'épaulement externe de la première partie planaire de contact au sol et s'étendant dans la direction circonférentielle tout en étant en regard d'une partie de paroi latérale externe du pneu ;
ledit second corps principal (12) étant un second corps principal en forme de U (122) sensiblement en forme de U en coupe transversale et ayant une seconde partie planaire interne (122a) continue avec une partie d'épaulement interne de ladite seconde partie planaire de contact au sol et s'étendant dans la direction circonférentielle tout en étant en regard de la partie de paroi latérale interne, et une seconde partie planaire externe (122c) continue avec une partie d'épaulement externe de ladite seconde partie planaire de contact au sol et s'étendant dans la direction circonférentielle tout en étant en regard de la partie de paroi latérale externe ;
un angle inclus entre les extrémités avant et arrière dans la direction circonférentielle de ladite première partie planaire de contact au sol ou de ladite seconde partie planaire de contact au sol et un centre de rotation du pneu étant de 10° à 60° ; et
la partie de raccordement arrière interne (1112) du premier corps principal (11) et la partie de raccordement avant interne (1211) du second corps principal (12) pouvant être raccordées ;
**caractérisé en ce que** :
le premier corps principal (11) comprend un matériau élastique et le second corps principal (12) comprend un matériau élastique ;
dans lequel ledit matériau élastique est un caoutchouc ou une résine.

2. Dispositif antidérapage de pneu comprenant le corps principal selon la revendication 1.

3. Dispositif antidérapage de pneu selon la revendication 2, dans lequel ledit angle inclus est de 20° à 50°.

4. Dispositif antidérapage de pneu selon la revendication 2 ou 3, dans lequel
ladite partie de raccordement arrière interne (1112) est disposée sur une partie arrière de la première partie planaire interne ;
ladite partie de raccordement avant externe (1131) est disposée sur une partie avant de la première partie planaire externe ;
ladite partie de raccordement avant interne (1211) est disposée sur une partie avant de la seconde partie planaire interne ; et
ladite partie de raccordement arrière externe (1232) est disposée sur une partie arrière de la seconde partie planaire externe.

5. Dispositif antidérapage de pneu selon la revendication 2 ou 3, dans lequel
ledit premier corps principal (11) a une partie arrière interne étendue (111) s'étendant vers l'arrière de ladite première partie planaire interne et une partie d'extension avant externe (113) s'étendant vers l'avant de ladite première partie planaire externe ;
ledit second corps principal (12) a une partie d'extension avant interne (121) s'étendant vers l'avant de ladite seconde partie planaire interne et une partie d'extension arrière externe (123) s'étendant vers l'arrière de ladite seconde partie planaire externe ;
ladite partie de raccordement arrière interne (1112) est disposée sur la partie d'extension arrière interne (111) ;
ladite partie de raccordement avant externe (1131) est disposée sur la partie d'extension avant externe (113) ;
ladite partie de raccordement avant interne (1211) est disposée sur la partie d'extension avant interne (121) ; et
ladite partie de raccordement arrière externe (1232) est disposée sur la partie d'extension arrière externe (123).

6. Dispositif antidérapage de pneu selon l'une quelconque des revendications 2 à 5, dans lequel
ledit premier corps principal (11) et ledit second corps principal (12) comprennent :
une partie planaire de contact au sol constituant ladite première partie planaire de contact au sol ou ladite seconde partie planaire de contact au sol ; et
des corps principaux intégrés ayant quatre parties de raccordement constituant l'une quelconque de ladite partie de raccordement arrière interne (1112), de ladite partie de raccordement avant externe (1131), de ladite partie de raccordement avant interne (1211) ou de ladite partie de raccordement arrière externe (1232).

7. Dispositif antidérapage de pneu selon l'une quelconque des revendications 2 à 6, comprenant en outre un corps de raccordement interne (13) pour raccorder ladite partie de raccordement arrière interne (1112) et ladite partie de raccordement avant interne (1211) ;
le corps de raccordement interne (13) étant souple ou étirable.

8. Dispositif antidérapage de pneu selon la revendication 7, dans lequel ledit corps de raccordement interne (13) est un corps de raccordement interne en forme de bande.

9. Dispositif antidérapage de pneu selon la revendication 7 ou 8, dans lequel ledit corps de raccordement interne (13) comprend un élément d'ajustement de longueur interne (133) pour ajuster une longueur de raccordement.

10. Dispositif antidérapage de pneu selon l'une quelconque des revendications 2 à 9, comprenant en outre un corps de raccordement externe raccordé à ladite partie de raccordement avant externe (1131) ou à ladite partie de raccordement arrière externe (1232) ;
le corps de raccordement externe (15) étant souple ou étirable.

11. Dispositif antidérapage de pneu selon la revendication 10, dans lequel ledit corps de raccordement externe (15) est un corps de raccordement externe en forme de bande.

12. Dispositif antidérapage de pneu selon la revendication 10 ou 11, dans lequel ledit corps de raccordement externe (15) comprend un élément d'ajustement de longueur externe pour ajuster une longueur de raccordement.

13. Dispositif antidérapage de pneu selon l'une quelconque des revendications 2 à 12, comprenant en outre un élément de raccordement de montage/retrait ayant une de ses parties d'extrémité qui est raccordée à ladite partie de raccordement avant externe (1131) et une autre de ses parties d'extrémité qui est raccordée à ladite partie de raccordement arrière externe (1232), l'élément de raccordement de montage/retrait étant capable de se raccorder de manière détachable entre la première partie d'extrémité et l'autre partie d'extrémité.

14. Dispositif antidérapage de pneu selon l'une quelconque des revendications 2 à 13, dans lequel ladite première partie planaire de contact au sol ou ladite seconde partie planaire de contact au sol a des propriétés antidérapage ou des éléments antidérapage sur son côté périphérique externe.

15. Dispositif antidérapage de pneu selon l'une quelconque des revendications 2 à 14, dans lequel ladite première partie planaire de contact au sol ou ladite seconde partie planaire de contact au sol a des saillies de verrouillage ou des éléments de verrouillage sur son côté périphérique interne.

16. Dispositif antidérapage de pneu selon la revendication 2, dans lequel ledit premier corps principal (11) et ledit second corps principal (12) comprennent des corps moulés d'un seul tenant dudit caoutchouc ou de ladite résine.

17. Dispositif antidérapage de pneu selon l'une quelconque des revendications 2 à 16, dans lequel deux ou plus d'unités élémentaires, dans lesquelles ledit premier corps principal (11) et ledit second corps principal (12) sont raccordés entre ladite partie de raccordement arrière interne et ladite partie de raccordement avant interne, sont raccordées entre une partie de raccordement avant externe d'un élément unitaire adjacent et une partie de raccordement arrière externe de l'autre unité élémentaire adjacente.
